# EUROPEAN PATENT SPECIFICATION

(11) **EP 4 142 354 B1**
(45) Date of publication and mention of the grant of the patent: **11.11.2026**
(21) Application number: 21791855.6
(22) Date of filing: 20.04.2021
(51) Int. Cl.: H04W 28/02, H04W 76/11, H04W 76/14, H04W 76/27

(54) **INFORMATION TRANSMISSION METHOD, NETWORK DEVICE, AND TERMINALS**
INFORMATIONSÜBERTRAGUNGSVERFAHREN, NETZWERKVORRICHTUNG UND ENDGERÄTE
PROCÉDÉ DE TRANSMISSION D'INFORMATIONS, DISPOSITIF RÉSEAU ET TERMINAUX

(30) Priority: 20.04.2020 CN 202010313400; 23.07.2020 CN 202010717121
(43) Date of publication of application: 01.03.2023
(73) Proprietor: Datang Mobile Communications Equipment Co., Ltd., Beijing 100085 (CN)
(72) Inventor: ZHAO, Yali, Beijing 100085 (CN); WANG, Da, Beijing 100085 (CN)
(74) Representative: Studio Torta S.p.A.
(86) International application number: PCT/CN2021/088362
(87) International publication number: WO 2021/213373

(56) References cited:
- EP-A1- 4 106 410
- WO-A1-2018/076288
- WO-A1-2018/141294
- CN-A- 107 889 080
- CN-A- 108 391 285
- CN-A- 110 662 299
- CN-A- 111 901 784
- US-A1- 2017 111 754
- COOLPAD: "Discussion on RRC Message Transportation via L2 Relay UE", 3GPP TSG-RAN WG2 MEETING #97 R2- 1701248, 3 February 2017 (2017-02-03), XP051222834

## Description

### TECHNICAL FIELD

The present disclosure relates to the field of communications technology, in particular to an information transmission method, a network device and terminals.

### BACKGROUND

To extend coverage, one solution is to introduce Layer 2 (L2) relay. The L2 relay can be a terminal with a relay function.

For a UE-to-Network Relay, the interface between the L2 relay and the network is the interface between the terminal and the network (that is, the Uu interface), and the interface between the L2 relay and the relayed UE (referred to as a remote UE) uses a sidelink interface. The link between the L2 relay and the network may be called a backhaul link (BH) for the remote UE. The backhaul link is also called Uu link.

In the L2 relay scenario, there is no clear solution for UE to mapping between at least two of the sidelink interface bearer (or Radio Link Control (RLC) channel or RLC layer logical channel) and backhaul link bearer (or RLC channel or RLC layer logical channel), the end-to-end bearer (or the RLC channel or the RLC layer logical channel).

International Application published with No. WO2018141294A1 discloses a communication method which comprises: a remote UE receiving a PC5 interface configuration message, the PC5 interface configuration message being used for configuring the remote UE to support a device to device (D2D) communication function; the remote UE performing the corresponding configuration according to the PC5 interface configuration message and/or first pre-configuration information.

### SUMMARY

Embodiments of the present disclosure provide an information transmission method, a network device and a terminal, so as to solve the problem that the network side device obtains too little available information of the terminal. The invention is set out in the appended set of claims.

The present disclosure has the following advantages.

The network device determines the mapping relationship among the target object of the sidelink interface, the target object of the backhaul link and the end-to-end target object in the L2 relay scenario. The target object is one of the bearer, the RCL channel and the RCE layer logic channel, so as to ensure L2 relay works normally and improve the reliability of the network communication.

### BRIEF DESCRIPTION OF THE DRAWINGS

FIG. 1 shows a schematic diagram of cellular network communication;
FIG. 2 shows a schematic diagram of a network architecture for sidelink;
FIG. 3 shows the schematic diagram of UE-to-Network Relay;
FIG. 4 shows a schematic flowchart of the information transmission method according to some embodiments of the present disclosure;
FIG. 5 shows a detailed flowchart of the information transmission method according to some embodiments of the present disclosure;
FIG. 6 shows another detailed flowchart of the information transmission method according to some embodiments of the present disclosure;
FIG. 7 shows yet another detailed flowchart of the information transmission method according to some embodiments of the present disclosure;
FIG. 8 shows another schematic flowchart of the information transmission method according to some embodiments of the present disclosure;
FIG. 9 shows yet another schematic flowchart of the information transmission method according to some embodiments of the present disclosure;
FIG. 10 shows a block diagram of a network device according to some embodiments of the present disclosure;
FIG. 11 shows a structural diagram of a network device according to some embodiments of the present disclosure;
FIG. 12 shows a block diagram of the terminal according to some embodiments of the present disclosure;
FIG. 13 shows a structural diagram of a terminal according to some embodiments of the present disclosure;
FIG. 14 shows another block diagram of the terminal according to some embodiments of the present disclosure;
FIG. 15 shows another structural diagram of a terminal according to some embodiments of the present disclosure.

### DETAILED DESCRIPTION

In order to make the objective, technical solution and advantage of the present disclosure clearer, the present disclosure will be described in detail below with reference to the accompanying drawings and specific embodiments.

First, some concepts related to the embodiments of the present disclosure are described as follows.

### 1. Cellular network communication

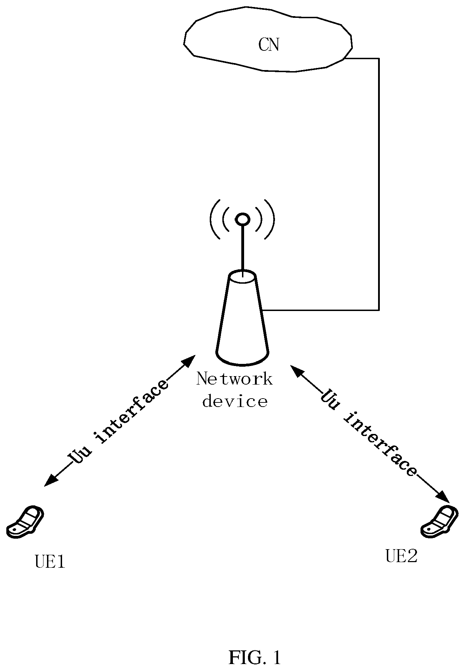

The traditional wireless communication adopts the cellular network communication mode, that is, the terminal and the network device transmit uplink and downlink data/control information through the interface between the terminal and the network (i.e., the Uu interface). The specific network architecture is shown in FIG. 1.

### 2. Sidelink

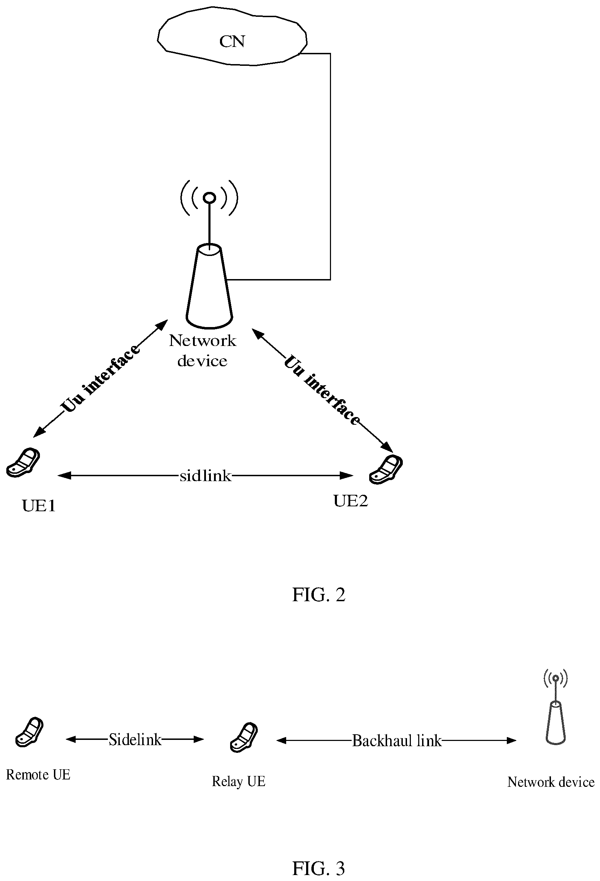

Sidelink refers to the way in which adjacent terminals can transmit data/control information through a direct communication link (also known as Sidelink or PC5 link) within a short range. The wireless interface corresponding to the Sidelink is called a direct communication interface (also called the Sidelink interface or the PC5 interface). The specific network architecture is shown in FIG. 2.

### 3. L2 relay

In order to extend the network coverage, L2 relay can be considered. The L2 relay may be a terminal with a relay function. For UE-to-Network Relay, the interface between the L2 relay and the network is the Uu interface, and the interface between the L2 relay and the relayed UE (referred to as the remote UE) is the sidelink interface (also known as Sidelink interface or PC5 interface). The link between the L2 relay and the network may be referred to as a backhaul link for the remote UE. A schematic diagram of UE-to-Network Relay is shown in FIG. 3.

The bearer, Radio Link Control (RLC) channel or RLC layer logical channel in the L2 relay scenario is divided into three types:
1. Sidelink interface bearer, RLC channel or RLC layer logical channel: that is, the bearer, RLC channel or RLC layer logical channel between the remote UE and the relay UE;
2. The end-to-end bearer, RLC channel or RLC layer logical channel between the remote UE and the network device: that is, the end-to-end bearer, RLC channel or RLC layer logical channel between the remote end and the network device;
3. The bearer, RLC channel or RLC layer logical channel of the remote UE on the Uu interface backhaul link: that is, the bearer, RLC channel or RLC layer logic channel used to carry the data/control information of the remote UE between the relay UE and the network device.

Regardless of the type of bearer, the RLC channel or the RLC layer logical channel, the bearer and the logical channel are in one-to-one correspondence, and the logical channel has a corresponding logical channel identifier.

In the L2 relay scenario, there is no clear solution for UE to mapping between at least two of the sidelink interface bearer (or RLC channel or RLC layer logical channel), backhaul link bearer (or RLC channel or RLC layer logical channel), the end-to-end bearer (or RLC channel or RLC layer logical channel).

In view of the above problems, the present disclosure provides an information transmission method, a network device and a terminal.

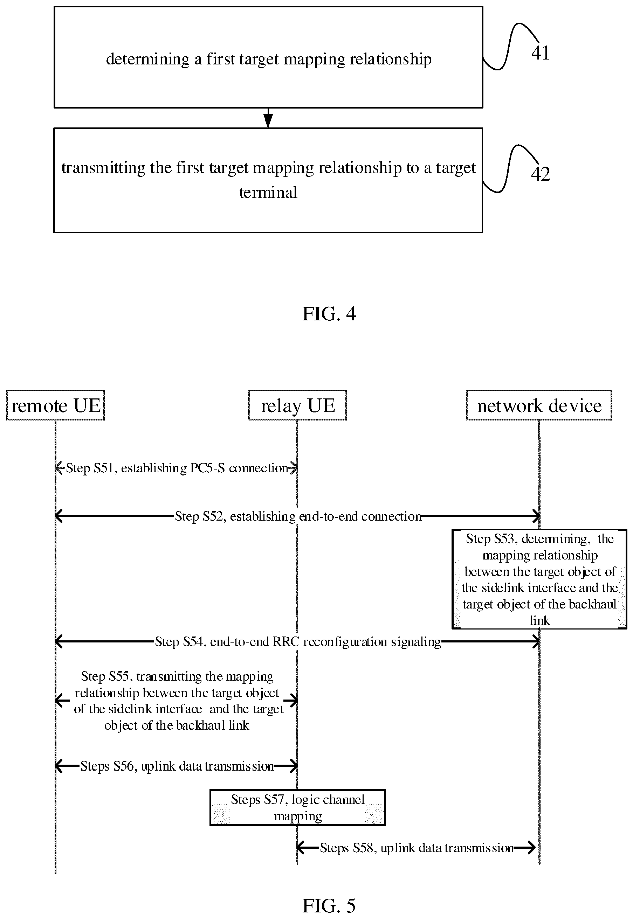

As shown in FIG. 4, the information transmission method of some embodiments of the present disclosure, applied to a network device, includes:
Step 41, determining a first target mapping relationship;
Step 42, transmitting the first target mapping relationship to a target terminal;

It should be noted here that the target terminal includes: a first terminal and/or a second terminal, that is, after the network device determines to obtain the first target mapping relationship, it can only transmit the first target mapping relationship to the first terminal, the first target mapping relationship may be transmitted only to the second terminal, and the first target mapping relationship may also be transmitted to the first terminal and the second terminal at the same time.

It should be noted that the second terminal mentioned in some embodiments of the present disclosure is a relay terminal corresponding to the first terminal, that is, the second terminal is a relay terminal (relay UE), and the first terminal can be regarded as the remote terminal (remote UE).

It should also be noted that, in some embodiments of the present disclosure, bearers and logical channels are in a one-to-one correspondence, that is, bearers may be represented by logical channels.

It should be further noted that the first target mapping relationship includes at least one of the following:
A11. a first mapping relationship between a target object of the sidelink interface and a target object of the backhaul link;
Specifically, the target object of the sidelink interface refers to the target object of the sidelink interface between the first terminal and the second terminal, that is, the target object of the sidelink interface between the relay UE and the remote UE; the target object of the backhaul link refers to a target object between the second terminal and the network device for carrying data and/or control information of the first terminal.

The target object is one of bearer, radio link control (RLC) channel and RLC layer logical channel. Taking the target object as a bearer as an example: the first target mapping relationship may include: a first mapping relationship between a sidelink interface bearer and a backhaul link bearer; taking the target object as an RLC channel as an example, the first target mapping relationship may include: the first mapping relationship between the sidelink interface RLC channel and the backhaul link RLC channel; taking the target object as an RLC layer logical channel as an example, the first target mapping relationship may include: the first mapping relationship between the sidelink interface RLC layer logical channel and the backhaul link RLC layer logical channel.

A12. a second mapping relationship between the target object of the sidelink interface and an end-to-end target object;
Specifically, the end-to-end target object refers to an end-to-end target object between the first terminal and the network device.

The target object is one of bearer, RLC channel and RLC layer logical channel. Taking the target object as a bearer as an example: the first target mapping relationship may include: a second mapping relationship between a sidelink interface bearer and an end-to-end bearer; taking the target object as an RLC channel as an example, the first target mapping relationship may include: a second mapping relationship between the sidelink interface RLC channel and the end-to-end RLC channel; taking the target object as an RLC layer logical channel as an example, the first target mapping relationship may include: a second mapping relationship between the sidelink interface RLC layer logical channel and the end-to-end RLC layer logical channel.

A13. a third mapping relationship between the end-to-end target object and the target object of the backhaul link;
The target object is one of bearer, RLC channel and RLC layer logical channel. Taking the target object as a bearer as an example: the first target mapping relationship may include: a third mapping relationship between an end-to-end bearer and a backhaul link bearer; taking the target object as an RLC channel as an example, the first target mapping relationship may include: a third mapping relationship between the end-to-end RLC channel and the backhaul link RLC channel; taking the target object as an RLC layer logical channel as an example, the first target mapping relationship may include: a third mapping relationship between the end-to-end RLC layer logical channel and the backhaul link RLC layer logical channel.

A14. A fourth mapping relationship among the end-to-end target object, the target object of the backhaul link, and the target object of the sidelink interface;
The target object is one of bearer, RLC channel and RLC layer logical channel. Taking the target object as a bearer as an example: the first target mapping relationship may include: a fourth mapping relationship among an end-to-end bearer, a backhaul link bearer, and a sidelink interface bearer; taking the target object as an RLC channel for example, the first target mapping relationship may include: a fourth mapping relationship among an end-to-end RLC channel, a backhaul link RLC channel, and a sidelink interface RLC channel; taking the target object as an RLC layer logical channel as an example, the first target mapping relationship may include: a fourth mapping relationship among the end-to-end RLC layer logical channel, the backhaul link RLC layer logical channel, and the sidelink interface RLC layer logical channel.

It should be noted that the fourth mapping relationship mentioned in some embodiments of the present disclosure may refer to the mapping relationship between two target objects among the three target objects, or may be the mapping relationship among the three target objects.

Specifically, it should be noted that the embodiment of the target object of the sidelink interface mentioned in some embodiments of the present disclosure may be one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface.

When the target object is the bearer, the embodiment of the sidelink interface bearer may be one of the following:
A21. A combination of a sidelink interface source L2 ID, a sidelink interface destination L2 ID, and a sidelink radio bearer identifier corresponding to the sidelink interface bearer;
For example, the sidelink radio bearer identifier may be an SLRB ID.
A22. a combination of the sidelink interface source L2 ID, the sidelink interface destination L2 ID, the sidelink interface cast type, and the sidelink radio bearer identifier corresponding to the sidelink interface bearer;
Specifically, the cast type of the sidelink interface includes: unicast, groupcast or broadcast.
A23. A combination of the sidelink interface source L2 ID, the sidelink interface destination L2 ID, and the logical channel identifier corresponding to the sidelink interface bearer;
For example, the logical channel identifier may be LCID.

A24. A combination of the sidelink interface source L2 ID, the sidelink interface destination L2 ID, the sidelink interface cast type, and the logical channel identifier corresponding to the sidelink interface bearer.

When the target object is the RLC channel, the form of the sidelink interface RLC channel may be one of the following:
a combination of the sidelink interface source L2 ID, the sidelink interface destination L2 ID, and the RLC channel identifier corresponding to the sidelink interface RLC channel;
a combination of the sidelink interface source L2 ID, the sidelink interface destination L2 ID, the sidelink interface cast type, and the RLC channel identifier corresponding to the sidelink interface RLC channel;
a combination of the sidelink interface source L2 ID, the sidelink interface destination L2 ID, and the logical channel identifier corresponding to the sidelink interface RLC channel;
a combination of the sidelink interface source L2 ID, the sidelink interface destination L2 ID, the sidelink interface cast type, and the logical channel identifier corresponding to the sidelink interface RLC channel.

When the target object is the RLC layer logical channel, the form of the sidelink interface RLC layer logical channel may be one of the following:
a combination of the sidelink interface source L2 ID, the sidelink interface destination L2 ID, and the logical channel identifier corresponding to the sidelink interface RLC layer logical channel;
a combination of the sidelink interface source L2 ID, the sidelink interface destination L2 ID, the sidelink interface cast type, and the logical channel identifier corresponding to the sidelink interface RLC layer logical channel;
a combination of the sidelink interface source L2 ID, the sidelink interface destination L2 ID, and the logical channel identifier;
a combination of the sidelink interface source L2 ID, the sidelink interface destination L2 ID, the sidelink interface cast type, and logical channel identifier.

Specifically, it should be noted that the end-to-end target object mentioned in some embodiments of the present disclosure includes at least one of the following:
a target object identifier of a Uu interface;
a logical channel identifier of the Uu interface;
a target object identifier of the Uu interface and a user identifier of the first terminal;
a logical channel identifier of the Uu interface, and the user identifier of the first terminal.

When the target object is the bearer, the end-to-end bearer may be one of the following:
A31. A bearer identifier of the Uu interface;
For example, the bearer identifier of the Uu interface may be the RB ID corresponding to the bearer of the Uu interface.

A32. The logical channel identifier of the Uu interface;
For example, the logical channel identifier of the Uu interface may be the LCID corresponding to the logical channel of the Uu interface.

A33. The bearer identifier of the Uu interface, and the user identifier of the first terminal;
It should be noted here that the user identifier of the first terminal may be a cell radio network temporary identity (C-RNTI).

A34. The logical channel identifier of the Uu interface, and the user identifier of the first terminal.

When the target object is the RLC channel, the end-to-end RLC channel may be one of the following:
The RLC channel identifier of the Uu interface; for example, the RLC channel identifier of the Uu interface may be the RB ID corresponding to the RLC channel of the Uu interface.

The logical channel identifier of the Uu interface; for example, the logical channel identifier of the Uu interface may be the LCID corresponding to the logical channel of the Uu interface.

The RLC channel identifier of the Uu interface and the user identifier of the first terminal;
The logical channel identifier of the Uu interface, and the user identifier of the first terminal.

When the target object is the RLC layer logical channel, the end-to-end RLC layer logical channel may be one of the following:
The logical channel identifier of the Uu interface;
The logical channel identifier of the Uu interface, and the user identifier of the first terminal.

Specifically, it should be noted that the target object of the backhaul link mentioned in some embodiments of the present disclosure includes at least one of the following:
The target object identifier of the Uu interface;
The logical channel identifier of the Uu interface;
The target object identifier of the Uu interface and a user identifier of the second terminal;
The logical channel identifier of the Uu interface, and the user identifier of the second terminal.

When the target object is the bearer, the backhaul link bearer includes at least one of the following:
A41. Bearer identifier of the Uu interface;
A42. Logical channel identifier of the Uu interface;
A43. The bearer identifier of the Uu interface, and the user identifier of the second terminal;
It should be noted that the user identifier of the second terminal may be C-RNTI.

A44. The logical channel identifier of the Uu interface, and the user identifier of the second terminal.

When the target object is the RLC channel, the backhaul link RLC channel includes at least one of the following:
RLC channel identifier of the Uu interface;
The logical channel identifier of the Uu interface;
The RLC channel identifier of the Uu interface and the user identifier of the second terminal;
The logical channel identifier of the Uu interface, and the user identifier of the second terminal.

When the target object is the RLC layer logical channel, the backhaul link RLC layer logical channel includes at least one of the following:
The logical channel identifier of the Uu interface;
The logical channel identifier of the Uu interface, and the user identifier of the second terminal.

It should be noted that, since there are both the target object of the backhaul link and the end-to-end target object between the second terminal and the network device, in order to distinguish these two types of target objects, the target object of the backhaul link between the second terminal and the network device also includes:
Target object type indication information;
The target object type indication information is used to indicate whether the target object is the target object of the backhaul link. For example: bearer type indication information, the bearer type indication information is used to indicate whether the bearer is a backhaul link bearer; RLC channel type indication information, the RLC channel type indication information is used to indicate whether the RLC channel is a backhaul link RLC channel; RLC layer logical channel type indication information, the RLC layer logical channel type indication information is used to indicate whether the logical channel is a backhaul link RLC layer logical channel.

It should be noted that, because data transmission is divided into uplink transmission and downlink transmission, the network device needs to maintain the first target mapping relationship based on the uplink transmission direction and the downlink transmission direction respectively, that is, the first target mapping relationship is maintained separately based on the uplink transmission direction and the downlink transmission direction, to ensure the accuracy of target object mapping during uplink and downlink data transmission.

It should be noted that, regardless of uplink transmission or downlink transmission, after the end-to-end connection between the first terminal and the network device is established, the sidelink interface bearer identifier or logical channel identifier or RLC channel identifier of the first terminal are all allocated by the network device.

It should be further noted that the specific implementation of step 41 is:
Notifying the first target mapping relationship to the target terminal through end-to-end Radio Resource Control (RRC) signaling.

Specifically, the RRC signaling may be RRC reconfiguration signaling.

It should be noted that when the network device only notifies the first target mapping relationship to the first terminal, the first terminal further needs to notify the first target mapping relationship to the second terminal through the sidelink interface Radio Resource Control (PC5-RRC) signaling; when the network device only notifies the first target mapping relationship to the second terminal, the second terminal also needs to notify the first target mapping relationship to the first terminal through PC5-RRC signaling; it should also be noted that the network device can also notify the first target mapping relationship to the first terminal and the second terminal respectively through the end-to-end RRC signaling. In this case, the first terminal is not required. The first target mapping relationship will not be transmitted between the first terminal and the second terminal.

It should also be noted that whether the first target mapping relationship is sent through RRC signaling or the PC5-RRC signaling, Corresponding configuration information can be carried in the RRC signaling (or PC5-RRC signaling). Specifically, because the specific content of the first target mapping relationship is different, the configuration information carried in RRC signaling (or PC5-RRC signaling) will also be different. The configuration information carried in RRC signaling (or PC5-RRC signaling) is specifically described as follows.

A51. In the case that the first target mapping relationship includes: the first mapping relationship between the target object of the sidelink interface and the target object of the backhaul link, the target configuration information is carried in the RRC signaling (or PC5-RRC signaling);

Wherein, the target configuration information includes: at least one of the configuration information of the target object of the sidelink interface and the configuration information of the target object of the backhaul link.

Taking the target object as the bearer as an example, in the case that the first target mapping relationship includes: the first mapping relationship between the sidelink interface bearer and the backhaul link bearer, the target configuration information is carried in the RRC signaling (or PC5 -RRC signaling); the target configuration information includes: at least one of the configuration information of the sidelink interface bearer and the configuration information of the backhaul link bearer.

When the target object is the RLC channel (or the RLC layer logical channel), in the case that the first target mapping relationship includes: a first mapping relationship between a sidelink interface RLC channel (or the RLC layer logical channel) and a backhaul link RLC channel (or the RLC layer logical channel), the RRC signaling (or PC5-RRC signaling) also carries target configuration information; the target configuration information includes: at least one of configuration information of the sidelink interface RLC channel (or the RLC layer logical channel) and configuration information of the backhaul link RLC channel (or the RLC layer logical channel).

A52. When the first target mapping relationship includes: a second mapping relationship between the target object of the sidelink interface and the end-to-end target object, the RRC signaling (or PC5-RRC signaling) also carry target configuration information;
Wherein, the target configuration information includes: at least one of the configuration information of the target object of the sidelink interface and the configuration information of the end-to-end target object.

Taking the target object as the bearer as an example, in the case that the first target mapping relationship includes: the second mapping relationship between the sidelink interface bearer and the end-to-end bearer, the RRC signaling (or PC5 -RRC signaling) also carries target configuration information; the target configuration information includes: at least one of the configuration information of the sidelink interface bearer and the configuration information of the end-to-end bearer.

Taking the target object as the RLC channel (or the RLC layer logical channel) as an example, the first target mapping relationship includes: the second mapping relationship between the sidelink interface RLC channel (or the RLC layer logical channel) and the end-to-end RLC channel (or RLC layer logical channels), the RRC signaling (or PC5-RRC signaling) also carries target configuration information; the target configuration information includes: at least one of the configuration information of the sidelink interface RLC channel (or the RLC layer logical channel) and the configuration information of the end-to-end RLC channel (or the RLC layer logical channel).

A53. In the case that the first target mapping relationship includes: a third mapping relationship between the end-to-end target object and the target object of the backhaul link, the RRC signaling (or PC5-RRC signaling) also carries the target configuration information;
Wherein, the target configuration information includes: at least one of the configuration information of the end-to-end target object and the configuration information of the target object of the backhaul link.

Taking the target object as the bearer as an example, the first target mapping relationship includes: a third mapping relationship between an end-to-end bearer and a backhaul link bearer, the RRC signaling (or PC5-RRC signaling) also carries target configuration information; the target configuration information includes: at least one of the configuration information of the end-to-end bearer and the configuration information of the backhaul link bearer.

Taking the target object as the RLC channel (or the RLC layer logical channel) as an example, the first target mapping relationship includes: the third mapping relationship between the end-to-end RLC channel (or the RLC layer logical channel) and the backhaul link RLC channel (or the RLC layer logical channels), the RRC signaling (or PC5-RRC signaling) also carries target configuration information; the target configuration information includes: at least one of the configuration information of the end-to-end RLC channel (or the RLC layer logical channel) and the configuration information of the backhaul link RLC channel (or the RLC layer logical channel).

A54. When the first target mapping relationship includes: the fourth mapping relationship between the end-to-end target object, the target object of the backhaul link, and the target object of the sidelink interface, the RRC signaling (or PC5 -RRC signaling) also carries target configuration information;

The target configuration information includes at least one of: configuration information of the target object of the sidelink interface, configuration information of the end-to-end target object, and configuration information of the target object of the backhaul link.

Taking the target object as the bearer as an example, in the case that the first target mapping relationship includes: a fourth mapping relationship between an end-to-end bearer, a backhaul link bearer, and a sidelink interface bearer, the RRC signaling (or PC5-RRC signaling) also carries target configuration information; the target configuration information includes at least one of the configuration information of the sidelink interface bearer, the configuration information of the end-to-end bearer, and the configuration information of the backhaul link bearer.

When the target object is the RLC channel (or RLC layer logical channel), the first target mapping relationship includes: a fourth mapping relationship among an end-to-end RLC channel (or RLC layer logical channel), a backhaul link RLC channel (or RLC layer logical channel) or the sidelink interface RLC channel (or RLC layer logical channel), the RRC signaling (or PC5-RRC signaling) also carries target configuration information; the target configuration information includes: at least one of configuration information of the sidelink interface RLC channel (or RLC layer logical channel), configuration information of the end-to-end RLC channel (or RLC layer logical channel), or the configuration information of the backhaul link RLC channel (or RLC layer logical channel).

It should be noted that the configuration information mentioned above may be Service Data Adaptation Protocol (SDAP) layer configuration information, Packet Data Convergence Protocol (PDCP) layer configuration information, Radio Link Control (RLC) layer configuration information, Media Access Control (MAC) layer configuration information/Physical (PHY) layer configuration information, etc.

It should be noted that when the RRC signaling notifying the first target mapping relationship sent by the network device carries the target configuration information, the PC5-RRC signaling notifying the first target mapping relationship sent between the second terminal and the first terminal also carries the same target configuration information as in the RRC signaling; when the RRC signaling sent by the network device does not carry the target configuration information, the PC5-RRC signaling for the second terminal interacting the first target mapping relationship with the first terminal does not carry target configuration information.

It should also be noted that, when the target configuration information includes a quality of service (QoS) parameter, the information transmission method of some embodiments of the present disclosure further includes:
Dividing, by the network device, the QoS parameter of the end-to-end target object between the target object of the sidelink interface and the target object of the backhaul link.

It should be noted that the division manner depends on the specific implementation of the network device.

It should also be noted that, before the first terminal and the second terminal obtain the first target mapping relationship, a sidelink interface (PC5-S) connection needs to be established between the first terminal and the second terminal.

Specifically, the establishment method of the PC5-S connection includes one of the following:
A61. Using a PC5-S message dedicated to a relay system for PC5-S connection;
A62. Adding indication information to the PC5-S connection establishment request message, wherein the indication information is used to indicate that the purpose of establishing the PC5-S connection is to request the second terminal to serve as a relay from the first terminal to the network.

It should also be noted that, in order to ensure that the second terminal can implement the relay function, before the second terminal obtains the first target mapping relationship, the second terminal determines that the data and/or control information of the first terminal are transmitted on the backhaul link by using the default target object of the backhaul link. The target object may be one of bearer, RLC channel and RLC layer logical channel.

Taking the first target mapping relationship including the first mapping relationship between the target object of the sidelink interface and the target object of the backhaul link as an example, the specific application of some embodiments of the present disclosure will be described in detail as follows.

Case 1: After the network device determines the mapping relationship between the target object of the sidelink interface and the target object of the backhaul link, the mapping relationship is only notified to the remote UE, and the relay data is transmitted as uplink data after the relay connection is established. The specific implementation process is shown in FIG. 5.
Step S51, establishing, by the remote UE and the relay UE, a PC5-S connection;
Specifically, the remote UE first performs relay UE selection, and then the remote UE and the relay UE establish a PC5-S connection. It is indicated in the PC5-S connection establishment process that the PC5-S connection is for UE-to-Network relay. There are two specific instructions:
   - Introducing a PC5-S messages dedicated to relay connection establishment;
   - Adding indication information to the existing sidelink interface PC5-S connection establishment request message, indicating that the PC5-S connection establishment is for UE-to-Network relay.
Step S52, establishing, by the remote UE, an end-to-end connection with the network device through the relay UE;
Specifically, after the remote UE and the relay UE establish a PC5-S connection, the remote UE triggers a NAS process, and establishes an end-to-end connection with the network device through the relay UE. Before the remote UE and the network device establish an end-to-end connection and obtain the mapping relationship between the target object of the sidelink interface and the target object of the backhaul link:
   - The data of the remote UE uses the default target object of the backhaul link (default BH target object) on the Uu interface backhaul link.
   - The source L2 ID of the sidelink interface contained in the PDU header of the adaptation layer of the relay UE and the network device is the source L2 ID, the sidelink interface destination L2 ID, the target object of the sidelink interface or the logical channel identifier allocated during the establishment of the PC5-S connection between the remote UE and the relay UE in the transmission direction,.

In the case that the target object is the bearer, before the remote UE and the network device establish an end-to-end connection and obtain the mapping relationship between the sidelink interface bearer and the backhaul link bearer: the data of the remote UE uses the default bearer of the backhaul link (default BH bearer) on the Uu interface backhaul link; the source L2 ID of the sidelink interface included in the PDU header of the adaptation layer of the relay UE and the network device is the source L2 ID, the destination L2 ID of the sidelink interface, the sidelink interface bearer or the logical channel identifier allocated during the establishment of the PC5-S connection between the remote UE and the relay UE in the transmission direction.

In the case that the target object is the RLC channel (or the RLC layer logical channel), before the remote UE and the network device establish an end-to-end connection and obtain the mapping relationship between the sidelink interface RLC channel (or the RLC layer logical channel) and the backhaul link RLC channel (or RLC layer logical channels): the data of the remote UE uses the backhaul link default RLC channel (or RLC layer logical channel) on the Uu interface backhaul link; the sidelink interface source L2 ID included in the PDU header of the adaptation layer of the relay UE and the network device is the source L2 ID, sidelink interface destination L2 ID, sidelink interface RLC channel (or RLC layer logical channel) or logical channel identifier allocated during the establishment of the PC5-S connection between the remote UE and the relay UE in the transmission direction.

Step S53, determining, by the network device, the mapping relationship between the target object of the sidelink interface and the target object of the backhaul link;
The specific implementation of the mapping relationship may be one of the following:
B 11. The mapping relationship between the target object identifier of the sidelink interface and the target object identifier of the backhaul link;
B12. The mapping relationship between the sidelink interface logical channel identifier and the backhaul link logical channel identifier.

In the case that the target object is the bearer, the step S53 may be: determining, by the network device, the mapping relationship between the sidelink interface bearer and the backhaul link bearer; the mapping relationship may be one of the following: the mapping relationship between the sidelink interface bearer identifier and the backhaul link bearer identifier; the mapping relationship between the sidelink interface logical channel identifier and the backhaul link logical channel identifier.

In the case that the target object is an RLC channel, the step S53 may be: determining, by the network device, the mapping relationship between the sidelink interface RLC channel and the backhaul link RLC channel; the mapping relationship may be one of the following: the mapping relationship between the sidelink interface RLC channel identifier and the backhaul link RLC channel identifier; the mapping relationship between the sidelink interface logical channel identifier and the backhaul link logical channel identifier.

When the target object is an RLC layer logical channel, the step S53 may be: determining, by the network device, the mapping relationship between the sidelink interface RLC layer logical channel and the backhaul link RLC layer logical channel; the mapping relationship may be: the mapping relationship between the sidelink interface logical channel identifier and the backhaul link logical channel identifier.

Wherein, the bearer identifier (or RLC channel identifier or RLC layer logical channel identifier) is as follows:
The backhaul link bearer identifier (or RLC channel identifier or RLC layer logical channel identifier) is the RB ID corresponding to the backhaul link bearer (or RLC channel or RLC layer logical channel);
The sidelink interface bearer identifier (or RLC channel identifier or RLC layer logical channel identifier) may be one of the following:
   B21. The combination of the sidelink interface source L2 ID, the sidelink interface destination L2 ID, and the SLRB ID corresponding to the sidelink interface bearer (or the RLC channel or the RLC layer logical channel);
   B22. The combination of the sidelink interface source L2 ID, the sidelink interface destination L2 ID, the sidelink interface cast type, and the SLRB ID corresponding to the sidelink interface bearer (or RLC channel or RLC layer logical channel), wherein the sidelink interface cast type is unicast, groupcast or broadcast.

Wherein, the logical channel identifiers are as follows:
The backhaul link logical channel identifier is the LCID corresponding to the backhaul link logical channel;
The sidelink interface logical channel identifier the can be one of the following:
   B31. The combination of the sidelink interface source L2 ID, the sidelink interface destination L2 ID, and the LCID corresponding to the sidelink interface bearer (or the RLC channel or the RLC layer logical channel);
   B32. The combination of the sidelink interface source L2 ID, the sidelink interface destination L2 ID, the sidelink interface cast type, and the LCID corresponding to the sidelink interface bearer (or RLC channel or RLC layer logical channel), wherein the sidelink interface cast type is unicast, groupcast or broadcast.

After the end-to-end connection is established between the remote UE and the network device, regardless of uplink or downlink transmission, the target object identifier (bearer identifier or logical channel identifier or RLC channel identifiers) of the sidelink interface of the remote UE is allocated by the network device.

Step S54, transmitting, by the network device, end-to-end RRC reconfiguration signaling to the remote UE through the relay UE;
The RRC reconfiguration signaling includes the mapping relationship between the target object of the sidelink interface and the target object of the backhaul link. For example: the RRC reconfiguration signaling includes the mapping relationship between the sidelink interface bearer and the backhaul link bearer; or the RRC reconfiguration signaling includes the mapping between the sidelink interface RLC channel and the backhaul link RLC channel or, the RRC reconfiguration signaling includes a mapping relationship between the sidelink interface RLC layer logical channel and the backhaul link RLC layer logical channel.

Optionally, when the mapping relationship is indicated in the uplink transmission direction and the downlink transmission direction separately.

In addition, the RRC reconfiguration signaling may also carry the configuration information of the target object of the sidelink interface and/or the configuration information of the target object of the backhaul link (such as SDAP/PDCP/RLC/MAC/PHY configuration, etc. ).

In order to implement end-to-end QoS management between the remote UE and the network device, if the configuration information of the target object of the sidelink interface and/or the configuration information of the target object of the backhaul link includes QoS parameters, the network device needs to divide the QoS parameters of the end-to-end target object between the remote UE and the network device between the target object of the sidelink interface and the target object of the backhaul link. The specific division algorithm depends on the network implementation. For example, assuming the delay requirement PDB in the end-to-end QoS parameters between the remote UE and the network device, the network device can divide the delay requirement into two parts: PDB1 of the sidelink interface bearer (or the RLC channel or the RLC layer logic channel) and PDB2 of the backhaul link (or RLC channel or RLC layer logical channel), to ensure that PDB1+PDB2=PDB.

Step S55, transmitting, by the remote UE, the mapping relationship between the target object of the sidelink interface and the target object of the backhaul link to the relay UE through PC5-RRC;
In the case that the target object is the bearer, the step S55 may be: transmitting, by the remote UE, the mapping relationship between the sidelink interface bearer and the backhaul link bearer to the relay UE through PC5-RRC. When the target object is an RLC channel, step S55 may be: transmitting, by the remote UE, the mapping relationship between the sidelink interface RLC channel and the backhaul link RLC channel to the relay UE through PC5-RRC. In the case that the target object is the RLC layer logical channel, the step S55 may be: transmitting, by the remote UE, the mapping relationship between the sidelink interface RLC layer logical channel and the backhaul link RLC layer logical channel to the relay UE through PC5-RRC.

Steps S56, S57 and S58: transmitting, by the remote UE, uplink data to the relay UE through the sidelink interface, and the relay UE determines the target object of the backhaul link according the mapping relationship between the target object of the sidelink interface and the target object of the backhaul link in the uplink direction, and transmits the data of the remote UE to the network device by using the mapped target object of the backhaul link.

For example, when the target object is the bearer, the steps S56, S57 and S58 may be: transmitting, by the remote UE, uplink data to the relay UE through the sidelink interface, and the relay UE determines the backhaul link bearer according to mapping relationship between the sidelink interface bearer and the backhaul link in the uplink direction, and transmits the data of the remote UE to the network device by using the mapped backhaul link bearer.

In the case that the target object is the RLC channel, the steps S56, S57 and S58 may be: transmitting, by the remote UE, uplink data to the relay UE through the sidelink interface, and the relay UE determines the backhaul link RLC channel according to mapping relationship between the sidelink interface RLC channel and the backhaul link RLC channel in the uplink direction, and transmits the data of the remote UE to the network device by using the mapped backhaul link RLC channel.

In the case that the target object is an RLC layer logical channel, the steps S56, S57 and S58 may be: transmitting, by the remote UE, uplink data to the relay UE through the sidelink interface, and the relay UE determines the backhaul link RLC layer logic channel according to mapping relationship between the sidelink interface RLC layer logic channel and the backhaul link RLC layer logic channel in the uplink direction, and transmits the data of the remote UE to the network device by using the mapped backhaul link RLC layer logic channel.

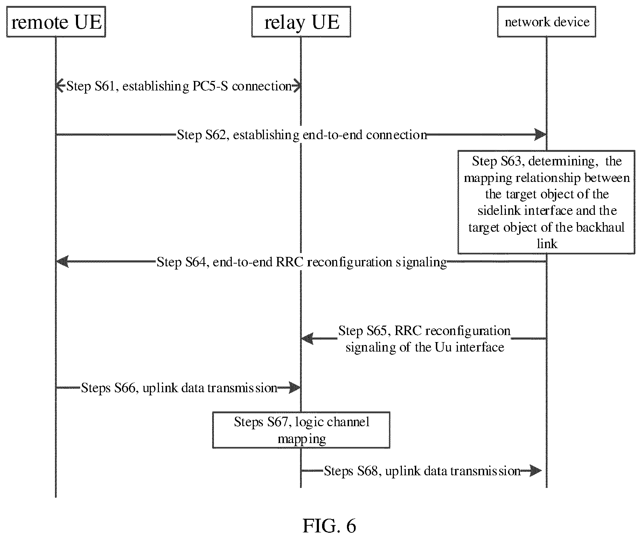

Case 2: After the network device determines the mapping relationship between the target object of the sidelink interface and the target object of the backhaul link, it notifies the remote UE and the relay UE of the mapping relationship at the same time, and after the relay connection is established, relay data transmission is uplink data transmission, and the specific implementation process is shown in FIG. 6.

The difference between the second case and the first case mainly lies in step S64 and step S65. Therefore, in this case, only steps S64 and S65 will be described, and other steps will not be repeated. In this embodiment, step S64 and step S65 are not required in order, whichever step can be performed first.

Step S64, transmitting, by the network device, end-to-end RRC reconfiguration signaling to the remote UE through the relay UE;

The RRC reconfiguration signaling includes the mapping relationship between the target object of the sidelink interface and the target object of the backhaul link. For example, the RRC reconfiguration signaling includes the mapping relationship between the sidelink interface bearer (or the RLC channel or the RLC layer logical channel) and the backhaul link bearer (or the RLC channel or the RLC layer logical channel).

Optionally, the mapping relationship is indicated in the uplink transmission direction and the downlink transmission direction separately.

In addition, the RRC reconfiguration signaling may also carry the configuration information of the target object of the sidelink interface and/or the configuration information of the target object of the backhaul link (such as SDAP/PDCP/RLC/MAC/PHY configuration, etc. ).

In order to implement end-to-end QoS management between the remote UE and the network device, if the configuration information of the target object of the sidelink interface and/or the configuration information of the target object of the backhaul link includes QoS parameters, the network device needs to divide the QoS parameters of the end-to-end target object between the remote UE and the network device between the target object of the sidelink interface and the target object of the backhaul link. The specific division algorithm depends on the network implementation. For example, assuming the delay requirement PDB in the end-to-end QoS parameters between the remote UE and the network device, the network device can divide the delay requirement into two parts: PDB1 of the sidelink interface bearer (or the RLC channel or the RLC layer logic channel) and PDB2 of the backhaul link (or RLC channel or RLC layer logical channel), to ensure that PDB1+PDB2=PDB.

Step S65, transmitting, by the network device, end-to-end RRC reconfiguration signaling to the relay UE;

The RRC reconfiguration signaling is an end-to-end message between the relay UE and the network device. The RRC reconfiguration signaling includes the mapping relationship between the target object of the sidelink interface and the target object of the backhaul link.

For example, when the target object is the bearer, the RRC reconfiguration signaling includes the mapping relationship between the sidelink interface bearer and the backhaul link bearer. When the target object is the RLC channel, the RRC reconfiguration signaling includes the mapping relationship between the sidelink interface RLC channel and the backhaul link RLC channel; when the target object is the RLC layer logic channel, the RRC reconfiguration signaling includes the mapping relationship between the sidelink interface RLC layer logical channel and the backhaul link RLC layer logical channel.

Optionally, the mapping relationship is indicated in the uplink transmission direction and the downlink transmission direction separately.

In addition, the RRC reconfiguration signaling may also carry the configuration information of the target object of the sidelink interface and/or the configuration information of the target object of the backhaul link (such as SDAP/PDCP/RLC/MAC/PHY configuration, etc. ).

In order to implement end-to-end QoS management between the remote UE and the network device, if the configuration information of the target object of the sidelink interface and/or the configuration information of the target object of the backhaul link includes QoS parameters, the network device needs to divide the QoS parameters of the end-to-end target object between the remote UE and the network device between the target object of the sidelink interface and the target object of the backhaul link. The specific division algorithm depends on the network implementation. For example, assuming the delay requirement PDB in the end-to-end QoS parameters between the remote UE and the network device, the network device can divide the delay requirement into two parts: PDB1 of the sidelink interface bearer (or the RLC channel or the RLC layer logic channel) and PDB2 of the backhaul link (or RLC channel or RLC layer logical channel), to ensure that PDB1+PDB2=PDB.

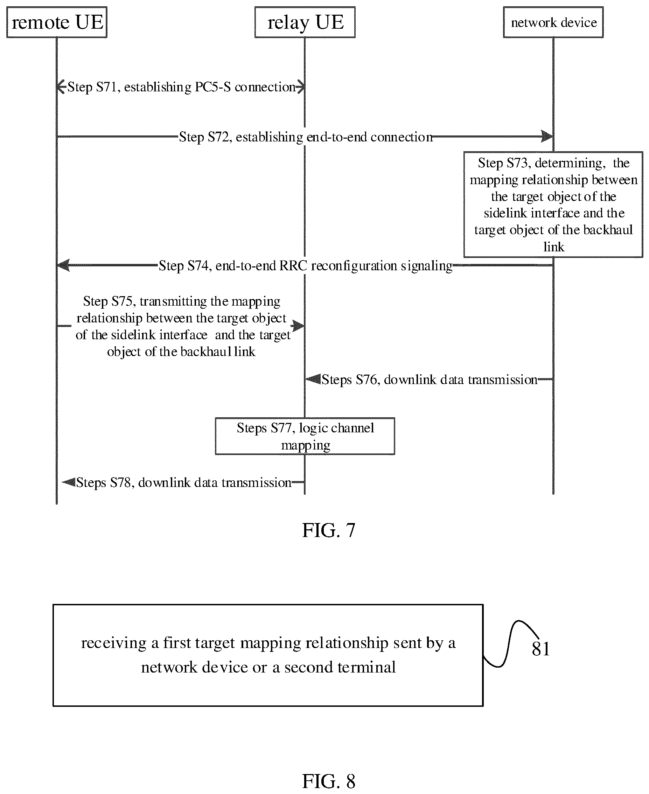

Case 3: After the network device determines the mapping relationship between the target object of the sidelink interface and the target object of the backhaul link, it only notifies the remote UE of the mapping relationship, and after the relay connection is established, the relay data transmission is downlink data transmission. The specific implementation process is shown in FIG. 7.

The difference between Case 3 and Case 1 mainly lies in Step S76, Step S77 and Step S78. Therefore, only step S76, step S77 and step S78 will be described, and other steps will not be repeated.

Steps S76, S77 and S78: transmitting, by the network device, end-to-end downlink data between the network device and the remote UE to the remote UE through the relay UE. The relay UE needs to perform the mapping in the downlink direction of the end-to-end target object, the target object of the backhaul link and the target object of the sidelink interface. And the data of the network device is transmitted to the remote UE by using the mapped target object of the sidelink interface.

Case 4. After determining the mapping relationship between the target object of the sidelink interface of the remote UE and the target object of the backhaul link of the remote UE on the Uu interface, the network device notifies the remote UE and the relay UE of the mapping relationship at the same time. And after the relay connection is established, the relay data transmission is downlink data transmission.

In this case, eight steps are included, wherein the first five steps are completely the same as the steps S61-S65 in the second case, and the last three steps are completely the same as the steps S76-S78 in the third case.

It should be noted that some embodiments of the present disclosure provide a method for the mapping relationship between bearer or RLC channel or RLC layer logical channel in a relay scenario. This method can ensure that the remote UE can perform data transmission normally with the network device through the relay UE, the reliability of network communication is improved.

As shown in FIG. 8, the information transmission methods of some embodiments of the present disclosure, applied to a first terminal, include:
Step 81, receiving a first target mapping relationship sent by a network device or a second terminal;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the second terminal is the relay terminal corresponding to the first terminal.

Further, receiving, by the first terminal, the first target mapping relationship sent by the network device includes:
Receiving the first target mapping relationship sent by the network device through the end-to-end radio resource control (RRC) signaling.

Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a backhaul link target object, the RRC signaling also carries target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, the receiving, by the first terminal, the first target mapping relationship sent by the second terminal includes:
Receiving the first target mapping relationship sent by the second terminal through the sidelink interface radio resource control (PC5-RRC) signaling.

Further, when the first terminal receives the first target mapping relationship sent by the network device, the method further includes:
Transmitting the first target mapping relationship to the second terminal through the sidelink interface radio resource control PC5-RRC signaling.

Optionally, when the first target mapping relationship includes: the first mapping relationship between the target object of the sidelink interface and the target object of the backhaul link, the PC5-RRC signaling also carries the target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the PC5-RRC signaling also carries the target configuration information. ;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the PC5-RRC signaling also carries the target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the PC5-RRC signaling also carries the target configuration information;
The target configuration information includes at least one of: configuration information of the target object of the sidelink interface, configuration information of the end-to-end target object, and configuration information of the target object of the backhaul link.

Optionally, before the receiving the first target mapping relationship sent by the network device or the second terminal, the method further includes:
Establishing a sidelink interface PC5-S connection with the second terminal.

Further, the establishment mode of the PC5-S connection includes the following one:
Establishing PC5-S connection using a PC5-S message dedicated to the relay system; or,
Adding indication information to a PC5-S connection establishment request message, wherein the indication information is used to indicate that the purpose of establishing the PC5-S connection is to request the second terminal to serve as a relay from the first terminal to the network.

It should be noted that the first terminal embodiment is corresponding to the above method embodiments, and all implementation in the method embodiments are applicable to the embodiments of the first terminal, and the same technical effect can also be achieved.

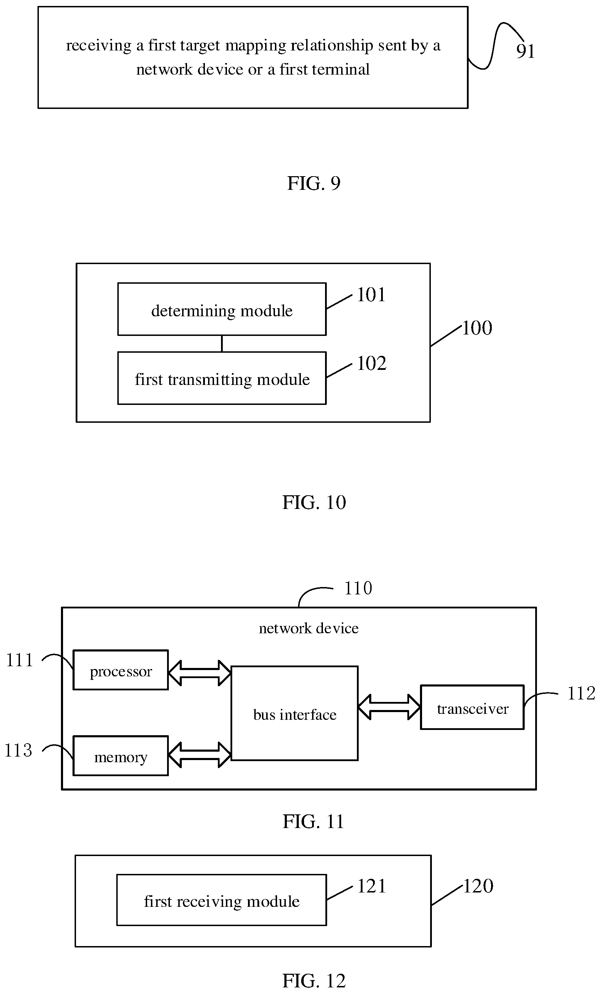

As shown in FIG. 9, the information transmission methods of some embodiments of the present disclosure, applied to a second terminal, include:
Step 91, receiving a first target mapping relationship sent by a network device or a first terminal;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the second terminal is the relay terminal corresponding to the first terminal.

Further, receiving, by the first terminal, the first target mapping relationship sent by the network device includes:
Receiving the first target mapping relationship sent by the network device through the end-to-end radio resource control (RRC) signaling.

Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a backhaul link target object, the RRC signaling also carries target configuration information;

Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, the receiving, by the second terminal, the first target mapping relationship sent by the first terminal includes:
Receiving the first target mapping relationship sent by the first terminal through the sidelink interface radio resource control (PC5-RRC) signaling.

Further, when the second terminal receives the first target mapping relationship sent by the network device, the method further includes:
Transmitting the first target mapping relationship to the first terminal through the sidelink interface radio resource control PC5-RRC signaling.

Optionally, when the first target mapping relationship includes: the first mapping relationship between the target object of the sidelink interface and the target object of the backhaul link, the PC5-RRC signaling also carries the target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the PC5-RRC signaling also carries the target configuration information. ;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the PC5-RRC signaling also carries the target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the PC5-RRC signaling also carries the target configuration information;
The target configuration information includes at least one of: configuration information of the target object of the sidelink interface, configuration information of the end-to-end target object, and configuration information of the target object of the backhaul link.

Optionally, the method further includes:
Determining the mapping relationship between the target object of the sidelink interface and the target object of the backhaul link according to the first target mapping relationship.

Optionally, before the receiving the first target mapping relationship sent by the network device or the first terminal, the method further includes:
determining that the data and/or control information of the first terminal is transmitted on the backhaul link using a default target object of the backhaul link.

It should be noted that the second terminal embodiment is corresponding to the above method embodiments, and all the implementation in the method embodiments are applicable to the embodiments of the second terminal, and the same technical effect can also be achieved.

As shown in FIG. 10, some embodiments of the present disclosure provide a network device 100, including:
A determining module 101, configured to determine a first target mapping relationship;
a first transmitting module 102, configured to transmit the first target mapping relationship to a target terminal;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the target terminal includes the first terminal and/or the second terminal, the second terminal is the relay terminal corresponding to the first terminal.

Specifically, the target object of the sidelink interface may be one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface.

Specifically, the sidelink interface cast type includes: unicast, groupcast or broadcast.

Specifically, the end-to-end target object includes at least one of the following:
a target object identifier of a Uu interface;
a logical channel identifier of the Uu interface;
a target object identifier of the Uu interface and a user identifier of the first terminal;
a logical channel identifier of the Uu interface, and the user identifier of the first terminal.

Specifically, the target object of the backhaul link includes at least one of the following:
The target object identifier of the Uu interface;
The logical channel identifier of the Uu interface;
The target object identifier of the Uu interface and a user identifier of the second terminal;
The logical channel identifier of the Uu interface, and the user identifier of the second terminal.

Further, the target object of the backhaul link further includes:
Target object type indication information;
The target object type indication information is used to indicate whether the target object is the target object of the backhaul link.

Optionally, the user identifier includes: a cell radio network temporary identity (C-RNTI).

Specifically, the first target mapping relationship is maintained separately based on the uplink transmission direction and the downlink transmission direction.

Specifically, the first transmitting module 102 is configured to:
Notify the first target mapping relationship to the target terminal through end-to-end Radio Resource Control (RRC) signaling.

Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the RRC signaling also carries target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, when the target configuration information includes: a quality of service (QoS) parameter, the network device further includes:
a first dividing module, configured to divide the QoS parameter of the end-to-end target object between the target object of the sidelink interface and the target object of the backhaul link.

It should be noted that the network device embodiment is corresponding to the above method embodiment, and all the implementation in the above method embodiment are applicable to the network device embodiment, and the same technical effect can also be achieved.

As shown in FIG. 11, some embodiments of the present disclosure further provide a network device 110 including a processor 111, a transceiver 112, a memory 113, and a program stored on the memory 113 and executed by the processor 111; wherein, the transceiver 112 is connected to the processor 111 and the memory 113 through a bus interface, wherein the processor 111 is used to read the program in the memory, and perform the following processes:
determining a first target mapping relationship;
transmitting the first target mapping relationship to a target terminal through the transceiver 112;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the target terminal includes the first terminal and/or the second terminal, the second terminal is the relay terminal corresponding to the first terminal.

It should be noted that, in FIG. 11, the bus architecture may include any number of interconnected buses and bridges, specifically, various circuits of one or more processors represented by the processor 111 and the memory represented by the memory 113 are linked together. The bus architecture may also link together various other circuits, such as peripherals, voltage regulators, and power management circuits, which are well known in the art and, therefore, will not be described further herein. The bus interface provides the interface. Transceiver 112 may be a number of elements, including transmitters and transceivers that provide a means for communicating with various other devices over a transmission medium. The processor 111 is responsible for managing the bus architecture and general processing, and the memory 113 may store data used by the processor 111 when performing operations.

Specifically, the target object of the sidelink interface may be one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface.

Specifically, the sidelink interface cast type includes: unicast, groupcast or broadcast.

Specifically, the end-to-end target object includes at least one of the following:
a target object identifier of a Uu interface;
a logical channel identifier of the Uu interface;
a target object identifier of the Uu interface and a user identifier of the first terminal;
a logical channel identifier of the Uu interface, and the user identifier of the first terminal.

Specifically, the target object of the backhaul link includes at least one of the following:
The target object identifier of the Uu interface;
The logical channel identifier of the Uu interface;
The target object identifier of the Uu interface and a user identifier of the second terminal;
The logical channel identifier of the Uu interface, and the user identifier of the second terminal.

Further, the target object of the backhaul link further includes:
Target object type indication information;
The target object type indication information is used to indicate whether the target object is the target object of the backhaul link.

Optionally, the user identity includes: a C-RNTI.

Specifically, the first target mapping relationship is maintained separately based on the uplink transmission direction and the downlink transmission direction.

Specifically, the processor 111 is configured to read the program in the memory of transmitting the first target mapping relationship to the target terminal, and perform the following process:
Notify the first target mapping relationship to the target terminal through end-to-end Radio Resource Control (RRC) signaling
Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the RRC signaling also carries target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, when the target configuration information includes: quality of service QoS parameters, the processor 111 is configured to read the program in the memory, and also perform the following process:
dividing the QoS parameter of the end-to-end target object between the target object of the sidelink interface and the target object of the backhaul link.

The network device may be a Base Transceiver Station (BTS) in a global system of mobile communication (GSM) or a code division multiple access (CDMA), or a NodeB (NB) in the Wideband Code Division Multiple Access (WCDMA), or an evolved base station (Evolutional Node B, eNB or eNodeB) in LTE, or a relay station or access point, or a base station ng-NB (Next Generation Node B), a Central Unit (CU) or a Distribute Unit (DU), etc. in a future 5G network, which is not limited here.

Some embodiments of the present disclosure also provide a computer-readable storage medium on which a computer program is stored, wherein when the computer program is executed by a processor, the steps of an information transmission method applied to a network device are implemented.

As shown in FIG. 12, some embodiments of the present disclosure provide a terminal 120, the terminal is a first terminal, including:
a first receiving module 121 is configured to receive a first target mapping relationship sent by a network device or a second terminal;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the second terminal is the relay terminal corresponding to the first terminal.

Further, the first receiving module 121 receives the first target mapping relationship sent by the network device, and implements:
Receiving the first target mapping relationship sent by the network device through the end-to-end radio resource control (RRC) signaling.

Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a backhaul link target object, the RRC signaling also carries target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, the first receiving module 121 receives the first target mapping relationship sent by the second terminal, and implements:
Receiving the first target mapping relationship sent by the second terminal through the sidelink interface radio resource control (PC5-RRC) signaling.

Further, when the first receiving module 121 receives the first target mapping relationship sent by the network device, the first terminal further includes:
a second sending module, configured to transmit the first target mapping relationship to the second terminal through the sidelink interface radio resource control PC5-RRC signaling.

Optionally, when the first target mapping relationship includes: the first mapping relationship between the target object of the sidelink interface and the target object of the backhaul link, the PC5-RRC signaling also carries the target configuration information;

Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the PC5-RRC signaling also carries the target configuration information. ;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the PC5-RRC signaling also carries the target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the PC5-RRC signaling also carries the target configuration information;

The target configuration information includes at least one of: configuration information of the target object of the sidelink interface, configuration information of the end-to-end target object, and configuration information of the target object of the backhaul link.

Optionally, before the first receiving module 121 receives the first target mapping relationship sent by the network device or the second terminal, further includes:
a first establishment module, configured to establish a sidelink interface PC5-S connection with the second terminal.

Further, the establishment mode of the PC5-S connection includes the following one:
Establishing PC5-S connection using a PC5-S message dedicated to the relay system; or,
Adding indication information to a PC5-S connection establishment request message, wherein the indication information is used to indicate that the purpose of establishing the PC5-S connection is to request the second terminal to serve as a relay from the first terminal to the network.

It should be noted that the first terminal embodiment is corresponding to the above method embodiments, and all the implementation in the above method embodiments are applicable to the embodiments of the first terminal, and the same technical effect can also be achieved.

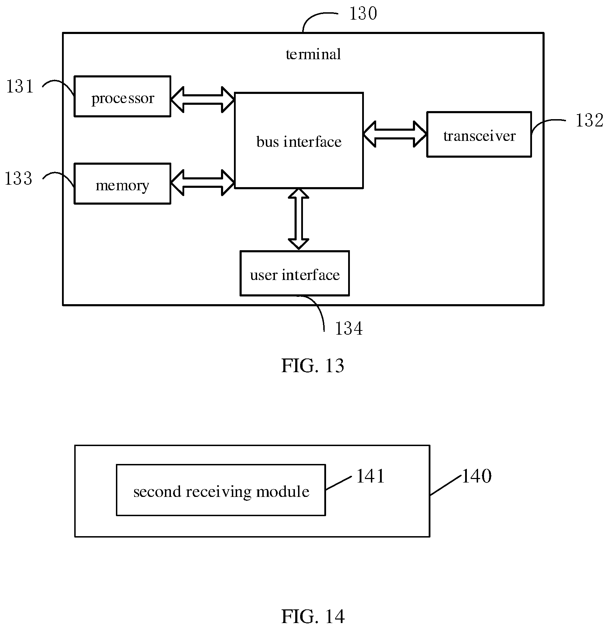

As shown in FIG. 13, some embodiments of the present disclosure further provide a terminal 130, where the terminal 130 is a first terminal, and includes a processor 131, a transceiver 132, a memory 133, and a program stored on the memory 133 and executed by the processor 131; wherein, the transceiver 132 is connected to the processor 131 and the memory 133 through a bus interface, wherein the processor 131 is used to read the program in the memory, and perform the following processes:
receiving, through the transceiver 132, a first target mapping relationship sent by a network device or a second terminal;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the second terminal is the relay terminal corresponding to the first terminal.

It should be noted that, in FIG. 13, the bus architecture may include any number of interconnected buses and bridges, specifically, various circuits of one or more processors represented by the processor 131 and the memory represented by the memory 133 are linked together. The bus architecture may also link together various other circuits, such as peripherals, voltage regulators, and power management circuits, which are well known in the art, therefore, will not be described further herein. The bus interface provides the interface. Transceiver 132 may be a number of elements, including transmitters and transceivers that provide means for communicating with various other devices over a transmission medium. For different sending ends, the user interface 134 may also be an interface capable of externally connecting a required device, and the connected devices include but are not limited to a keypad, a display, a speaker, a microphone, a joystick, and the like. The processor 131 is responsible for managing the bus architecture and general processing, and the memory 133 may store data used by the processor 131 when performing operations.

Further, the processor 131 is configured to read a program in the memory for the first terminal to receive the first target mapping relationship sent by the network device, and perform the following process:
Receiving the first target mapping relationship sent by the network device through the end-to-end radio resource control (RRC) signaling.

Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a backhaul link target object, the RRC signaling also carries target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, the processor 131 is configured to read the program in the memory for receiving the first target mapping relationship sent by the second terminal, and execute the following process:
Receiving the first target mapping relationship sent by the second terminal through the sidelink interface radio resource control (PC5-RRC) signaling.

Further, when the first terminal receives the first target mapping relationship sent by the network device, the processor 131 is configured to read the program in the memory, and also perform the following process:
Transmitting the first target mapping relationship to the second terminal through the sidelink interface radio resource control PC5-RRC signaling.

Optionally, when the first target mapping relationship includes: the first mapping relationship between the target object of the sidelink interface and the target object of the backhaul link, the PC5-RRC signaling also carries the target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the PC5-RRC signaling also carries the target configuration information. ;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the PC5-RRC signaling also carries the target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the PC5-RRC signaling also carries the target configuration information;
The target configuration information includes at least one of: configuration information of the target object of the sidelink interface, configuration information of the end-to-end target object, and configuration information of the target object of the backhaul link.

Further, before the first target mapping relationship sent by the network device or the second terminal is received, the processor 131 is configured to read the program in the memory, and also perform the following process:
Establishing a sidelink interface PC5-S connection with the second terminal.

Further, the establishment mode of the PC5-S connection includes the following one:
Establishing PC5-S connection using a PC5-S message dedicated to the relay system; or,
Adding indication information to a PC5-S connection establishment request message, wherein the indication information is used to indicate that the purpose of establishing the PC5-S connection is to request the second terminal to serve as a relay from the first terminal to the network.

Some embodiments of the present disclosure also provide a computer-readable storage medium on which a computer program is stored, wherein when the computer program is executed by a processor, the steps of the information transmission method applied to the first terminal are implemented.

As shown in FIG. 14, some embodiments of the present disclosure provide a terminal 140, where the terminal is a second terminal, including:
a second receiving module 141, configured to receive a first target mapping relationship sent by a network device or a first terminal;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the second terminal is the relay terminal corresponding to the first terminal.

Further, the second receiving module 141 receives the first target mapping relationship sent by the network device, and implements:
Receiving the first target mapping relationship sent by the network device through the end-to-end radio resource control (RRC) signaling.

Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a backhaul link target object, the RRC signaling also carries target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, the second receiving module 141 receives the first target mapping relationship sent by the first terminal, and implements:
Receiving the first target mapping relationship sent by the first terminal through the sidelink interface radio resource control (PC5-RRC) signaling.

Further, when the second receiving module 141 receives the first target mapping relationship sent by the network device, the second terminal further includes:
a third transmitting module, configured to transmit the first target mapping relationship to the first terminal through the sidelink interface radio resource control PC5-RRC signaling.

Optionally, when the first target mapping relationship includes: the first mapping relationship between the target object of the sidelink interface and the target object of the backhaul link, the PC5-RRC signaling also carries the target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the PC5-RRC signaling also carries the target configuration information. ;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the PC5-RRC signaling also carries the target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the PC5-RRC signaling also carries the target configuration information;
The target configuration information includes at least one of: configuration information of the target object of the sidelink interface, configuration information of the end-to-end target object, and configuration information of the target object of the backhaul link.

Further, the second terminal also includes:
a mapping determining module, configured to determine the mapping relationship between the target object of the sidelink interface and the target object of the backhaul link according to the first target mapping relationship.

Optionally, before the second receiving module 141 receives the first target mapping relationship sent by the network device or the first terminal, further includes:
a bearer determining module, configured to determine the mapping relationship between the target object of the sidelink interface and the target object of the backhaul link according to the first target mapping relationship.

It should be noted that the second terminal embodiment is corresponding to the above method embodiments, and all the implementation in the above method embodiments are applicable to the embodiments of the second terminal, and the same technical effect can also be achieved.

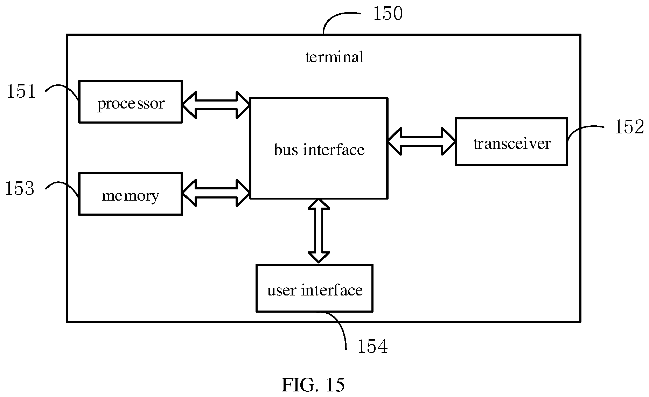

As shown in FIG. 15, some embodiments of the present disclosure further provide a terminal 150 including a processor 151, a transceiver 152, a memory 153 and a program stored on the memory 153 and executed by the processor 151. Wherein, the transceiver 152 is connected to the processor 151 and the memory 153 through the bus interface, the processor 151 is used to read the program in the memory, and execute the following process:
receiving a first target mapping relationship sent by a network device or a first terminal through the transceiver 152;
Wherein, the first target mapping relationship includes at least one of the following:
   a first mapping relationship between a target object of the sidelink interface and a target object of the backhaul link;
   a second mapping relationship between the target object of the sidelink interface and an end-to-end target object;
   a third mapping relationship between the end-to-end target object and the target object of the backhaul link;
   a fourth mapping relationship among the end-to-end target object, the target object of the backhaul link, and the target object of the sidelink interface;
   Wherein, the target object is one of bearer, RLC channel and RLC layer logical channel; the target object of the sidelink interface is the target object of the sidelink interface between the first terminal and the second terminal, the target object of the backhaul link is the target object between the second terminal and the network device for carrying the data and/or control information of the first terminal, and the end-to-end target object is the end-to-end target object between the first terminal and the network device; the second terminal is the relay terminal corresponding to the first terminal.

It should be noted that, in FIG. 15, the bus architecture may include any number of interconnected buses and bridges, specifically, various circuits of one or more processors represented by the processor 151 and the memory represented by the memory 153 are linked together. The bus architecture may also link together various other circuits, such as peripherals, voltage regulators, and power management circuits, which are well known in the art and, therefore, will not be described further herein. The bus interface provides the interface. Transceiver 152 may be a number of elements, including a transmitter and a transceiver that provide a means for communicating with various other devices over a transmission medium. For different sending ends, the user interface 154 may also be an interface capable of externally connecting a required device, and the connected devices include but are not limited to a keypad, a display, a speaker, a microphone, a joystick, and the like. The processor 151 is responsible for managing the bus architecture and general processing, and the memory 153 may store data used by the processor 151 in performing operations.

Further, the processor 151 is configured to read the program in the memory for receiving the first target mapping relationship sent by the network device, and execute the following process:
Receiving the first target mapping relationship sent by the network device through the end-to-end radio resource control (RRC) signaling.

Optionally, when the first target mapping relationship includes: the first mapping relationship between the target object of the sidelink interface and the target object of the backhaul link, the RRC signaling also carries target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the RRC signaling also carries target configuration information;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a backhaul link target object, the RRC signaling also carries target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the RRC signaling also carries the target configuration information;
The target configuration information includes at least one of: configuration information of the target object of the sidelink interface, configuration information of the end-to-end target object, and configuration information of the target object of the backhaul link.

Further, the processor 151 is used to read the program in the memory for receiving the first target mapping relationship sent by the first terminal, and implements:
Receiving the first target mapping relationship sent by the first terminal through the sidelink interface radio resource control (PC5-RRC) signaling.

Further, when the second terminal receives the first target mapping relationship sent by the network device, the processor 151 is configured to read the program in the memory, and also perform the following process:
Transmitting the first target mapping relationship to the first terminal through the sidelink interface radio resource control PC5-RRC signaling.

Optionally, when the first target mapping relationship includes: the first mapping relationship between the target object of the sidelink interface and the target object of the backhaul link, the PC5-RRC signaling also carries the target configuration information;
Wherein, the target configuration information includes: at least one of the configuration information of the target object of the sidelink interface and the configuration information of the target object of the backhaul link.

Optionally, when the first target mapping relationship includes: a second mapping relationship between the target object of the sidelink interface and the end-to-end target object, the PC5-RRC signaling also carries the target configuration information. ;
Wherein, the target configuration information includes: at least one of the configuration information of the target object of the sidelink interface and the configuration information of the end-to-end target object.

Optionally, when the first target mapping relationship includes: a third mapping relationship between an end-to-end target object and a target object of the backhaul link, the PC5-RRC signaling also carries the target configuration information;
Wherein, the target configuration information includes: at least one of the configuration information of the end-to-end target object and the configuration information of the target object of the backhaul link.

Optionally, when the first target mapping relationship includes: a fourth mapping relationship among the end-to-end target object, the target object of the backhaul link, and the target object of the sidelink interface, the PC5-RRC signaling also carries the target configuration information;
The target configuration information includes at least one of: configuration information of the target object of the sidelink interface, configuration information of the end-to-end target object, and configuration information of the target object of the backhaul link.

Further, the processor 151 is used for reading the program in the memory, and also performs the following processes:
Determining the mapping relationship between the target object of the sidelink interface and the target object of the backhaul link according to the first target mapping relationship.

Optionally, before receiving the first target mapping relationship sent by the network device or the first terminal, the processor 151 is configured to read the program in the memory, and also perform the following process:
determining that the data and/or control information of the first terminal is transmitted on the backhaul link using a default target object of the backhaul link.

Some embodiments of the present disclosure also provide a computer-readable storage medium on which a computer program is stored, wherein when the computer program is executed by a processor, the steps of the information transmission method applied to the second terminal are implemented.

Each module, unit, sub-unit or sub-module may be one or more integrated circuits configured to implement the above method, for example: one or more application specific integrated circuits (ASIC), or, one or more microprocessor (digital signal processor, DSP), or, one or more field programmable gate arrays (FPGA), etc. For another example, when one of the above modules is implemented in the form of a processing element scheduler code, the processing element may be a general-purpose processor, such as a central processing unit (CPU) or other processors that can invoke program codes. For another example, these modules can be integrated together and implemented in the form of a system-on-a-chip (SOC).

## Claims

1. An information transmission method, performed by a network device, the method comprising:
determining (41) a first target mapping relationship;
transmitting (42) the first target mapping relationship to a target terminal, wherein the target terminal includes a first terminal which is a remote terminal and a second terminal which is a relay terminal corresponding to the first terminal;
wherein the first target mapping relationship includes:
a mapping relationship among the end-to-end target object, the target object of the backhaul link, and a target object of a sidelink interface;
the target object of the sidelink interface is a radio link control, RLC, layer logical channel of a sidelink interface between the first terminal and the second terminal, the target object of the backhaul link is an RLC layer logical channel between the second terminal and the network device for carrying data and/or control information of the first terminal, and the end-to-end target object is an end-to-end bearer between the first terminal and the network device;
wherein the transmitting (42) the first target mapping relationship to a target terminal comprises:
notifying the first target mapping relationship to the target terminal through end-to-end Radio Resource Control, RRC, signaling;
wherein the RRC signaling carries target configuration information;
the target configuration information includes at least one of: configuration information of the target object of the sidelink interface, configuration information of the end-to-end target object, or configuration information of the target object of the backhaul link,
wherein, when the target configuration information includes a quality of service, QoS, parameter, the information transmission method further includes:
dividing the QoS parameter of the end-to-end target object between the target object of the sidelink interface and the target object of the backhaul link;
wherein the target object of the sidelink interface is identified by one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface;
wherein the end-to-end target object is identified by one of the following:
a target object identifier of a Uu interface;
a logical channel identifier of the Uu interface;
the target object identifier of the Uu interface and a user identifier of the first terminal;
the logical channel identifier of the Uu interface, and the user identifier of the first terminal;
wherein the target object of the backhaul link is identified by one of the following:
a target object identifier of a Uu interface;
a logical channel identifier of the Uu interface;
the target object identifier of the Uu interface and a user identifier of the second terminal;
the logical channel identifier of the Uu interface, and the user identifier of the second terminal.

2. The method according to claim 1, wherein the target object of the backhaul link further includes: target object type indication information;
the target object type indication information is used to indicate whether the target object is the target object of the backhaul link.

3. The method according to claim 1, wherein the user identifier includes: a cell radio network temporary identity, C-RNTI.

4. The method according to claim 1, wherein the first target mapping relationship is maintained separately based on an uplink transmission direction and a downlink transmission direction.

5. An information transmission method, performed by a first terminal, and comprising:
receiving (81) a first target mapping relationship sent by a network device;
wherein the first target mapping relationship includes:
a mapping relationship among the end-to-end target object, the target object of the backhaul link, and a target object of a sidelink interface;
the target object of the sidelink interface is a radio link control, RLC, layer logical channel of a sidelink interface between the first terminal and a second terminal, the target object of the backhaul link is an RLC layer logical channel between the second terminal and the network device for carrying data and/or control information of the first terminal, and the end-to-end target object is an end-to-end bearer between the first terminal and the network device; the second terminal is a relay terminal corresponding to the first terminal, and the first terminal is a remote terminal;
wherein the receiving (81) a first target mapping relationship sent by a network device includes:
receiving the first target mapping relationship sent by the network device through end-to-end radio resource control, RRC, signaling;
wherein the RRC signaling carries target configuration information;
the target configuration information includes at least one of: configuration information of the target object of the sidelink interface, configuration information of the end-to-end target object, or configuration information of the target object of the backhaul link;
wherein, when the target configuration information includes a quality of service, QoS, parameter, the QoS parameter of the end-to-end target object is divided between the target object of the sidelink interface and the target object of the backhaul link;
wherein the target object of the sidelink interface is identified by one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface;
wherein the end-to-end target object is identified by one of the following:
a target object identifier of a Uu interface;
a logical channel identifier of the Uu interface;
the target object identifier of the Uu interface and a user identifier of the first terminal;
the logical channel identifier of the Uu interface, and the user identifier of the first terminal;
wherein the target object of the backhaul link is identified by one of the following:
a target object identifier of a Uu interface;
a logical channel identifier of the Uu interface;
the target object identifier of the Uu interface and a user identifier of the second terminal;
the logical channel identifier of the Uu interface, and the user identifier of the second terminal.

6. An information transmission method, performed by a second terminal, and comprising:
receiving (91) a first target mapping relationship sent by a network device;
wherein the first target mapping relationship includes:
a mapping relationship among the end-to-end target object, the target object of the backhaul link, and a target object of a sidelink interface;
the target object of the sidelink interface is a radio link control, RLC, layer logical channel of a sidelink interface between a first terminal and the second terminal, the target object of the backhaul link is an RLC layer logical channel between the second terminal and the network device for carrying data and/or control information of the first terminal, and the end-to-end target object is an end-to-end bearer between the first terminal and the network device; the second terminal is a relay terminal corresponding to the first terminal, and the first terminal is a remote terminal;
wherein the receiving (91) a first target mapping relationship sent by a network device includes:
receiving the first target mapping relationship sent by the network device through end-to-end radio resource control, RRC, signaling;
wherein the RRC signaling carries target configuration information;
the target configuration information includes at least one of: configuration information of the target object of the sidelink interface, configuration information of the end-to-end target object, or configuration information of the target object of the backhaul link;
wherein, when the target configuration information includes a quality of service, QoS, parameter, the QoS parameter of the end-to-end target object is divided between the target object of the sidelink interface and the target object of the backhaul link;
wherein the target object of the sidelink interface is identified by one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface;
wherein the end-to-end target object is identified by one of the following:
a target object identifier of a Uu interface;
a logical channel identifier of the Uu interface;
the target object identifier of the Uu interface and a user identifier of the first terminal;
the logical channel identifier of the Uu interface, and the user identifier of the first terminal;
wherein the target object of the backhaul link is identified by one of the following:
a target object identifier of a Uu interface;
a logical channel identifier of the Uu interface;
the target object identifier of the Uu interface and a user identifier of the second terminal;
the logical channel identifier of the Uu interface, and the user identifier of the second terminal.

7. A network device (100), comprising:
a determining module (101), configured to determine a first target mapping relationship;
a first transmitting module (102), configured to transmit the first target mapping relationship to a target terminal, wherein the target terminal includes a first terminal which is a remote terminal and a second terminal which is a relay terminal corresponding to the first terminal;
wherein the first target mapping relationship includes:
a mapping relationship among the end-to-end target object, the target object of the backhaul link, and a target object of a sidelink interface;
the target object of the sidelink interface is a radio link control, RLC, layer logical channel of a sidelink interface between the first terminal and the second terminal, the target object of the backhaul link is an RLC layer logical channel between the second terminal and the network device for carrying data and/or control information of the first terminal, and the end-to-end target object is an end-to-end bearer between the first terminal and the network device;
wherein the first transmitting module (102) is further configured to:
notify the first target mapping relationship to the target terminal through end-to-end Radio Resource Control, RRC, signaling;
wherein the RRC signaling carries target configuration information;
the target configuration information includes at least one of: configuration information of the target object of the sidelink interface, configuration information of the end-to-end target object, or configuration information of the target object of the backhaul link,
wherein, the network device (100) further comprises:
a first dividing module, configured to divide, when the target configuration information includes a quality of service, QoS, parameter, the QoS parameter of the end-to-end target object between the target object of the sidelink interface and the target object of the backhaul link;
wherein the target object of the sidelink interface is identified by one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface;
wherein the end-to-end target object is identified by one of the following:
a target object identifier of a Uu interface;
a logical channel identifier of the Uu interface;
the target object identifier of the Uu interface and a user identifier of the first terminal;
the logical channel identifier of the Uu interface, and the user identifier of the first terminal;
wherein the target object of the backhaul link is identified by one of the following:
a target object identifier of a Uu interface;
a logical channel identifier of the Uu interface;
the target object identifier of the Uu interface and a user identifier of the second terminal;
the logical channel identifier of the Uu interface, and the user identifier of the second terminal.

8. A terminal (120), being a first terminal, comprising:
a first receiving module (121), configured to receive a first target mapping relationship sent by a network device;
wherein the first target mapping relationship includes:
a mapping relationship among the end-to-end target object, the target object of the backhaul link, and a target object of a sidelink interface;
the target object of the sidelink interface is a radio link control, RLC, layer logical channel of a sidelink interface between the first terminal and a second terminal, the target object of the backhaul link is an RLC layer logical channel between the second terminal and the network device for carrying data and/or control information of the first terminal, and the end-to-end target object is an end-to-end bearer between the first terminal and the network device; the second terminal is a relay terminal corresponding to the first terminal, and the first terminal is a remote terminal;
wherein the first receiving module (121) is further configured to:
receive the first target mapping relationship sent by the network device through end-to-end radio resource control, RRC, signaling;
wherein the RRC signaling carries target configuration information;
the target configuration information includes at least one of: configuration information of the target object of the sidelink interface, configuration information of the end-to-end target object, or configuration information of the target object of the backhaul link;
wherein, when the target configuration information includes a quality of service, QoS, parameter, the QoS parameter of the end-to-end target object is divided between the target object of the sidelink interface and the target object of the backhaul link;
wherein the target object of the sidelink interface is identified by one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface;
wherein the end-to-end target object is identified by one of the following:
a target object identifier of a Uu interface;
a logical channel identifier of the Uu interface;
the target object identifier of the Uu interface and a user identifier of the first terminal;
the logical channel identifier of the Uu interface, and the user identifier of the first terminal;
wherein the target object of the backhaul link is identified by one of the following:
a target object identifier of a Uu interface;
a logical channel identifier of the Uu interface;
the target object identifier of the Uu interface and a user identifier of the second terminal;
the logical channel identifier of the Uu interface, and the user identifier of the second terminal.

9. A terminal (140), being a second terminal, comprising:
a second receiving module (141), configured to receive a first target mapping relationship sent by a network device;
wherein the first target mapping relationship includes:
a mapping relationship among the end-to-end target object, the target object of the backhaul link, and a target object of a sidelink interface;
the target object of the sidelink interface is a radio link control, RLC, layer logical channel of a sidelink interface between a first terminal and the second terminal, the target object of the backhaul link is an RLC layer logical channel between the second terminal and the network device for carrying data and/or control information of the first terminal, and the end-to-end target object is an end-to-end bearer between the first terminal and the network device; the second terminal is a relay terminal corresponding to the first terminal, and the first terminal is a remote terminal;
wherein the second receiving module (141) is further configured to:
receive the first target mapping relationship sent by the network device through end-to-end radio resource control, RRC, signaling;
wherein the RRC signaling carries target configuration information;
the target configuration information includes at least one of: configuration information of the target object of the sidelink interface, configuration information of the end-to-end target object, or configuration information of the target object of the backhaul link;
wherein, when the target configuration information includes a quality of service, QoS, parameter, the QoS parameter of the end-to-end target object is divided between the target object of the sidelink interface and the target object of the backhaul link;
wherein the target object of the sidelink interface is identified by one of the following:
a combination of a sidelink interface source L2 ID, a sidelink interface destination L2 ID, and a target object identifier corresponding to the target object of the sidelink interface;
a combination of the sidelink interface source L2 ID, the sidelink interface destination L2 ID, a sidelink interface cast type, and the target object identifier corresponding to the target object of the sidelink interface;
a combination of the sidelink interface source L2 ID, the sidelink interface destination L2 ID, and a logical channel identifier corresponding to the target object of the sidelink interface;
a combination of the sidelink interface source L2 ID, the sidelink interface destination L2 ID, the sidelink interface cast type, and the logical channel identifier corresponding to the target object of the sidelink interface;
wherein the end-to-end target object is identified by one of the following:
a target object identifier of a Uu interface;
a logical channel identifier of the Uu interface;
the target object identifier of the Uu interface and a user identifier of the first terminal;
the logical channel identifier of the Uu interface, and the user identifier of the first terminal;
wherein the target object of the backhaul link is identified by one of the following:
a target object identifier of a Uu interface;
a logical channel identifier of the Uu interface;
the target object identifier of the Uu interface and a user identifier of the second terminal;
the logical channel identifier of the Uu interface, and the user identifier of the second terminal.

## Patentansprüche

1. Informationssendungsverfahren, das durch eine Netzwerkvorrichtung durchgeführt wird, das Verfahren umfassend:
Bestimmen (41) einer ersten Zielabbildungsbeziehung;
Senden (42) der ersten Zielabbildungsbeziehung an ein Zielendgerät, wobei das Zielendgerät ein erstes Endgerät, das ein entferntes Endgerät ist, und ein zweites Endgerät, das ein Relay-Endgerät ist, das dem ersten Endgerät entspricht, einschließt;
wobei die erste Zielabbildungsbeziehung einschließt:
eine Abbildungsbeziehung zwischen dem Ende-zu-Ende-Zielobjekt, dem Zielobjekt der Backhaul-Verbindung und einem Zielobjekt einer Sidelink-Schnittstelle;
das Zielobjekt der Sidelink-Schnittstelle ein logischer Kanal der Funkverbindungssteuerungsschicht, RLC-Schicht, einer Sidelink-Schnittstelle zwischen dem ersten Endgerät und dem zweiten Endgerät ist, das Zielobjekt der Backhaul-Verbindung ein logischer Kanal der RLC-Schicht zwischen dem zweiten Endgerät und der Netzwerkvorrichtung zum Übertragen von Daten und/oder Steuerinformationen des ersten Endgeräts ist, und das Ende-zu-Ende-Zielobjekt ein Ende-zu-Ende-Träger zwischen dem ersten Endgerät und der Netzwerkvorrichtung ist;
wobei das Senden (42) der ersten Zielabbildungsbeziehung an ein Zielendgerät umfasst:
Mitteilen der ersten Zielabbildungsbeziehung an das Zielendgerät über Ende-zu-Ende-Funkressourcensteuerungs-Signalisierung, Ende-zu-Ende-RRC-Signalisierung;
wobei die RRC-Signalisierung Zielkonfigurationsinformationen überträgt;
die Zielkonfigurationsinformationen eines einschließen von: Konfigurationsinformationen des Zielobjekts der Sidelink-Schnittstelle, Konfigurationsinformationen des Ende-zu-Ende-Zielobjekts oder Konfigurationsinformationen des Zielobjekts der Backhaul-Verbindung,
wobei, wenn die Zielkonfigurationsinformationen einen Dienstgüteparameter, QoS-Parameter, einschließen, das Informationssendungsverfahren ferner einschließt:
Aufteilen des QoS-Parameters des Ende-zu-Ende-Zielobjekts zwischen dem Zielobjekt der Sidelink-Schnittstelle und dem Zielobjekt der Backhaul-Verbindung;
wobei das Zielobjekt der Sidelink-Schnittstelle durch eines der Folgenden identifiziert wird:
eine Kombination aus einer Quell-L2-ID der Sidelink-Schnittstelle, einer Empfangsort-L2-ID der Sidelink-Schnittstelle und einem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, einem Cast-Typ der Sidelink-Schnittstelle und dem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle und einem logischen Kanalidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, dem Cast-Typ der Sidelink-Schnittstelle und dem logischen Kanalidentifizierer, der dem Zielobjekt der Sidelink-Schnittstelle entspricht;
wobei das Ende-zu-Ende-Zielobjekt durch eines der Folgenden identifiziert wird:
einen Zielobjektidentifizierer einer Uu-Schnittstelle;
einen Identifizierer eines logischen Kanals der Uu-Schnittstelle;
den Zielobjektidentifizierer der Uu-Schnittstelle und einen Benutzeridentifizierer des ersten Endgeräts;
den Identifizierer des logischen Kanas der Uu-Schnittstelle und den Benutzeridentifizierer des ersten Endgeräts;
wobei das Zielobjekt der Backhaul-Verbindung durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des zweiten Endgeräts;
den Identifizierer des logischen Kanals der Uu-Schnittstelle und den Benutzeridentifizierer des zweiten Endgeräts.

2. Verfahren nach Anspruch 1, wobei das Zielobjekt der Backhaul-Verbindung ferner einschließt: Zielobjekttypanzeigeinformationen;
die Zielobjekttypanzeigeinformationen verwendet werden, um anzuzeigen, ob das Zielobjekt das Zielobjekt der Backhaul-Verbindung ist.

3. Verfahren nach Anspruch 1, wobei der Benutzeridentifizierer einschließt: eine temporäre Zellfunknetzidentität, C-RNTI.

4. Verfahren nach Anspruch 1, wobei die erste Zielabbildungsbeziehung basierend auf einer Uplink-Sendungsrichtung und einer Downlink-Sendungsrichtung separat aufrechterhalten wird.

5. Informationssendungsverfahren, das durch ein erstes Endgerät durchgeführt wird, und umfassend:
Empfangen (81) einer ersten Zielabbildungsbeziehung, die durch eine Netzwerkvorrichtung übermittelt wird;
wobei die erste Zielabbildungsbeziehung einschließt:
eine Abbildungsbeziehung zwischen dem Ende-zu-Ende-Zielobjekt, dem Zielobjekt der Backhaul-Verbindung und einem Zielobjekt einer Sidelink-Schnittstelle;
das Zielobjekt der Sidelink-Schnittstelle ein logischer Kanal der Funkverbindungssteuerungsschicht, RLC-Schicht, einer Sidelink-Schnittstelle zwischen dem ersten Endgerät und einem zweiten Endgerät ist, das Zielobjekt der Backhaul-Verbindung ein logischer Kanal der RLC-Schicht zwischen dem zweiten Endgerät und der Netzwerkvorrichtung zum Übertragen von Daten und/oder Steuerinformationen des ersten Endgeräts ist, und das Ende-zu-Ende-Zielobjekt ein Ende-zu-Ende-Träger zwischen dem ersten Endgerät und der Netzwerkvorrichtung ist; das zweite Endgerät ein Relay-Endgerät ist, das dem ersten Endgerät entspricht, und das erste Endgerät ein entferntes Endgerät ist;
wobei das Empfangen (81) einer ersten Zielabbildungsbeziehung, die durch eine Netzwerkvorrichtung übermittelt wird, einschließt:
Empfangen der ersten Zielabbildungsbeziehung, die durch die Netzwerkvorrichtung über Ende-zu-Ende-Funkressourcensteuerungs-Signalisierung, RRC-Signalisierung, übermittelt wird;
wobei die RRC-Signalisierung Zielkonfigurationsinformationen überträgt;
die Zielkonfigurationsinformationen mindestens eines einschließen von: Konfigurationsinformationen des Zielobjekts der Sidelink-Schnittstelle, Konfigurationsinformationen des Ende-zu-Ende-Zielobjekts oder Konfigurationsinformationen des Zielobjekts der Backhaul-Verbindung;
wobei, wenn die Zielkonfigurationsinformationen einen Dienstgüteparameter, QoS-Parameter, einschließen, der QoS-Parameter des Ende-zu-Ende-Zielobjekts zwischen dem Zielobjekt der Sidelink-Schnittstelle und dem Zielobjekt der Backhaul-Verbindung aufgeteilt wird;
wobei das Zielobjekt der Sidelink-Schnittstelle durch eines der Folgenden identifiziert wird:
eine Kombination aus einer Quell-L2-ID der Sidelink-Schnittstelle, einer Empfangsort-L2-ID der Sidelink-Schnittstelle und einem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, einem Cast-Typ der Sidelink-Schnittstelle und dem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle und einem logischen Kanalidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, dem Cast-Typ der Sidelink-Schnittstelle und dem logischen Kanalidentifizierer, der dem Zielobjekt der Sidelink-Schnittstelle entspricht;
wobei das Ende-zu-Ende-Zielobjekt durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des ersten Endgeräts;
den Identifizierer des logischen Kanas der Uu-Schnittstelle und den Benutzeridentifizierer des ersten Endgeräts;
wobei das Zielobjekt der Backhaul-Verbindung durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des zweiten Endgeräts;
den Identifizierer des logischen Kanals der Uu-Schnittstelle und den Benutzeridentifizierer des zweiten Endgeräts.

6. Informationssendungsverfahren, das durch ein zweites Endgerät durchgeführt wird, und umfassend:
Empfangen (91) einer ersten Zielabbildungsbeziehung, die durch eine Netzwerkvorrichtung übermittelt wird;
wobei die erste Zielabbildungsbeziehung einschließt:
eine Abbildungsbeziehung zwischen dem Ende-zu-Ende-Zielobjekt, dem Zielobjekt der Backhaul-Verbindung und einem Zielobjekt einer Sidelink-Schnittstelle;
das Zielobjekt der Sidelink-Schnittstelle ein logischer Kanal der Funkverbindungssteuerungsschicht, RLC-Schicht, einer Sidelink-Schnittstelle zwischen einem ersten Endgerät und dem zweiten Endgerät ist, das Zielobjekt der Backhaul-Verbindung ein logischer Kanal der RLC-Schicht zwischen dem zweiten Endgerät und der Netzwerkvorrichtung zum Übertragen von Daten und/oder Steuerinformationen des ersten Endgeräts ist, und das Ende-zu-Ende-Zielobjekt ein Ende-zu-Ende-Träger zwischen dem ersten Endgerät und der Netzwerkvorrichtung ist; das zweite Endgerät ein Relay-Endgerät ist, das dem ersten Endgerät entspricht, und das erste Endgerät ein entferntes Endgerät ist;
wobei das Empfangen (91) einer ersten Zielabbildungsbeziehung, die durch eine Netzwerkvorrichtung übermittelt wird, einschließt:
Empfangen der ersten Zielabbildungsbeziehung, die durch die Netzwerkvorrichtung über Ende-zu-Ende-Funkressourcensteuerungs-Signalisierung, RRC-Signalisierung, übermittelt wird;
wobei die RRC-Signalisierung Zielkonfigurationsinformationen überträgt;
die Zielkonfigurationsinformationen mindestens eines einschließen von: Konfigurationsinformationen des Zielobjekts der Sidelink-Schnittstelle, Konfigurationsinformationen des Ende-zu-Ende-Zielobjekts oder Konfigurationsinformationen des Zielobjekts der Backhaul-Verbindung;
wobei, wenn die Zielkonfigurationsinformationen einen Dienstgüteparameter, QoS-Parameter, einschließen, der QoS-Parameter des Ende-zu-Ende-Zielobjekts zwischen dem Zielobjekt der Sidelink-Schnittstelle und dem Zielobjekt der Backhaul-Verbindung aufgeteilt wird;
wobei das Zielobjekt der Sidelink-Schnittstelle durch eines der Folgenden identifiziert wird:
eine Kombination aus einer Quell-L2-ID der Sidelink-Schnittstelle, einer Empfangsort-L2-ID der Sidelink-Schnittstelle und einem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, einem Cast-Typ der Sidelink-Schnittstelle und dem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle und einem logischen Kanalidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, dem Cast-Typ der Sidelink-Schnittstelle und dem logischen Kanalidentifizierer, der dem Zielobjekt der Sidelink-Schnittstelle entspricht;
wobei das Ende-zu-Ende-Zielobjekt durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des ersten Endgeräts;
den Identifizierer des logischen Kanas der Uu-Schnittstelle und den Benutzeridentifizierer des ersten Endgeräts;
wobei das Zielobjekt der Backhaul-Verbindung durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des zweiten Endgeräts;
den Identifizierer des logischen Kanals der Uu-Schnittstelle und den Benutzeridentifizierer des zweiten Endgeräts.

7. Netzwerkvorrichtung (100), umfassend:
ein Bestimmungsmodul (101), das konfiguriert ist, um eine erste Abbildungsbeziehung zu bestimmen;
ein erstes Sendemodul (102), das konfiguriert ist, um die erste Zielabbildungsbeziehung an ein Zielendgerät zu senden, wobei das Zielendgerät ein erstes Endgerät, das ein entferntes Endgerät ist, und ein zweites Endgerät, das ein Relay-Endgerät ist, das dem ersten Endgerät entspricht, einschließt;
wobei erste Zielabbildungsbeziehung einschließt:
eine Abbildungsbeziehung zwischen dem Ende-zu-Ende-Zielobjekt, dem Zielobjekt der Backhaul-Verbindung und einem Zielobjekt einer Sidelink-Schnittstelle;
das Zielobjekt der Sidelink-Schnittstelle ein logischer Kanal der Funkverbindungssteuerungsschicht, RLC-Schicht, einer Sidelink-Schnittstelle zwischen dem ersten Endgerät und dem zweiten Endgerät ist, das Zielobjekt der Backhaul-Verbindung ein logischer Kanal der RLC-Schicht zwischen dem zweiten Endgerät und der Netzwerkvorrichtung zum Übertragen von Daten und/oder Steuerinformationen des ersten Endgeräts ist, und das Ende-zu-Ende-Zielobjekt ein Ende-zu-Ende-Träger zwischen dem ersten Endgerät und der Netzwerkvorrichtung ist;
wobei das erste Sendemodul (102) ferner konfiguriert ist zum:
Mitteilen der ersten Zielabbildungsbeziehung an das Zielendgerät über Ende-zu-Ende-Funkressourcensteuerungs-Signalisierung, RRC-Signalisierung;
wobei die RRC-Signalisierung Zielkonfigurationsinformationen überträgt;
die Zielkonfigurationsinformationen eines einschließen von: Konfigurationsinformationen des Zielobjekts der Sidelink-Schnittstelle, Konfigurationsinformationen des Ende-zu-Ende-Zielobjekts oder Konfigurationsinformationen des Zielobjekts der Backhaul-Verbindung,
wobei die Netzwerkvorrichtung (100) ferner umfasst:
ein erstes Aufteilungsmodul, das konfiguriert ist, um, wenn die Zielkonfigurationsinformationen einen Dienstgüteparameter, QoS-Parameter, einschließen, den QoS-Parameter des Ende-zu-Ende-Zielobjekts zwischen dem Zielobjekt der Sidelink-Schnittstelle und dem Zielobjekt der Backhaul-Verbindung aufzuteilen;
wobei das Zielobjekt der Sidelink-Schnittstelle durch eines der Folgenden identifiziert wird:
eine Kombination aus einer Quell-L2-ID der Sidelink-Schnittstelle, einer Empfangsort-L2-ID der Sidelink-Schnittstelle und einem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, einem Cast-Typ der Sidelink-Schnittstelle und dem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle und einem logischen Kanalidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, dem Cast-Typ der Sidelink-Schnittstelle und dem logischen Kanalidentifizierer, der dem Zielobjekt der Sidelink-Schnittstelle entspricht;
wobei das Ende-zu-Ende-Zielobjekt durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des ersten Endgeräts;
den Identifizierer des logischen Kanas der Uu-Schnittstelle und den Benutzeridentifizierer des ersten Endgeräts;
wobei das Zielobjekt der Backhaul-Verbindung durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des zweiten Endgeräts;
den Identifizierer des logischen Kanals der Uu-Schnittstelle und den Benutzeridentifizierer des zweiten Endgeräts.

8. Endgerät (120), das ein erstes Endgerät ist, umfassend:
ein erstes Empfangsmodul (121), das konfiguriert ist, um eine erste Zielabbildungsbeziehung zu empfangen, die durch eine Netzwerkvorrichtung gesendet wird;
wobei die erste Zielabbildungsbeziehung einschließt:
eine Abbildungsbeziehung zwischen dem Ende-zu-Ende-Zielobjekt, dem Zielobjekt der Backhaul-Verbindung und einem Zielobjekt einer Sidelink-Schnittstelle;
das Zielobjekt der Sidelink-Schnittstelle ein logischer Kanal der Funkverbindungssteuerungsschicht, RLC-Schicht, einer Sidelink-Schnittstelle zwischen dem ersten Endgerät und einem zweiten Endgerät ist, das Zielobjekt der Backhaul-Verbindung ein logischer Kanal der RLC-Schicht zwischen dem zweiten Endgerät und der Netzwerkvorrichtung zum Übertragen von Daten und/oder Steuerinformationen des ersten Endgeräts ist, und das Ende-zu-Ende-Zielobjekt ein Ende-zu-Ende-Träger zwischen dem ersten Endgerät und der Netzwerkvorrichtung ist; das zweite Endgerät ein Relay-Endgerät ist, das dem ersten Endgerät entspricht, und das erste Endgerät ein entferntes Endgerät ist;
wobei das erste Empfangsmodul (121) ferner konfiguriert ist zum:
Empfangen der ersten Zielabbildungsbeziehung, die durch eine Netzwerkvorrichtung über Ende-zu-Ende-Funkressourcensteuerungs-Signalisierung, RRC-Signalisierung, übermittelt wird;
wobei die RRC-Signalisierung Zielkonfigurationsinformationen überträgt;
die Zielkonfigurationsinformationen mindestens eines einschließen von: Konfigurationsinformationen des Zielobjekts der Sidelink-Schnittstelle, Konfigurationsinformationen des Ende-zu-Ende-Zielobjekts oder Konfigurationsinformationen des Zielobjekts der Backhaul-Verbindung;
wobei, wenn die Zielkonfigurationsinformationen einen Dienstgüteparameter, QoS-Parameter, einschließen, der QoS-Parameter des Ende-zu-Ende-Zielobjekts zwischen dem Zielobjekt der Sidelink-Schnittstelle und dem Zielobjekt der Backhaul-Verbindung aufgeteilt wird;
wobei das Zielobjekt der Sidelink-Schnittstelle durch eines der Folgenden identifiziert wird:
eine Kombination aus einer Quell-L2-ID der Sidelink-Schnittstelle, einer Empfangsort-L2-ID der Sidelink-Schnittstelle und einem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, einem Cast-Typ der Sidelink-Schnittstelle und dem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle und einem logischen Kanalidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, dem Cast-Typ der Sidelink-Schnittstelle und dem logischen Kanalidentifizierer, der dem Zielobjekt der Sidelink-Schnittstelle entspricht;
wobei das Ende-zu-Ende-Zielobjekt durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des ersten Endgeräts;
den Identifizierer des logischen Kanas der Uu-Schnittstelle und den Benutzeridentifizierer des ersten Endgeräts;
wobei das Zielobjekt der Backhaul-Verbindung durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des zweiten Endgeräts;
den Identifizierer des logischen Kanals der Uu-Schnittstelle und den Benutzeridentifizierer des zweiten Endgeräts.

9. Endgerät (140), das ein zweites Endgerät ist, umfassend:
ein zweites Empfangsmodul (141), das konfiguriert ist, um eine erste Zielabbildungsbeziehung zu empfangen, die durch eine Netzwerkvorrichtung übermittelt wird;
wobei die erste Zielabbildungsbeziehung einschließt:
eine Abbildungsbeziehung zwischen dem Ende-zu-Ende-Zielobjekt, dem Zielobjekt der Backhaul-Verbindung und einem Zielobjekt einer Sidelink-Schnittstelle;
das Zielobjekt der Sidelink-Schnittstelle ein logischer Kanal der Funkverbindungssteuerungsschicht, RLC-Schicht, einer Sidelink-Schnittstelle zwischen einem ersten Endgerät und dem zweiten Endgerät ist, das Zielobjekt der Backhaul-Verbindung ein logischer Kanal der RLC-Schicht zwischen dem zweiten Endgerät und der Netzwerkvorrichtung zum Übertragen von Daten und/oder Steuerinformationen des ersten Endgeräts ist, und das Ende-zu-Ende-Zielobjekt ein Ende-zu-Ende-Träger zwischen dem ersten Endgerät und der Netzwerkvorrichtung ist; das zweite Endgerät ein Relay-Endgerät ist, das dem ersten Endgerät entspricht, und das erste Endgerät ein entferntes Endgerät ist;
wobei das zweite Empfangsmodul (141) ferner konfiguriert ist zum:
Empfangen der ersten Zielabbildungsbeziehung, die durch eine Netzwerkvorrichtung über Ende-zu-Ende-Funkressourcensteuerungs-Signalisierung, RRC-Signalisierung, übermittelt wird;
wobei die RRC-Signalisierung Zielkonfigurationsinformationen überträgt;
die Zielkonfigurationsinformationen mindestens eines einschließen von: Konfigurationsinformationen des Zielobjekts der Sidelink-Schnittstelle, Konfigurationsinformationen des Ende-zu-Ende-Zielobjekts oder Konfigurationsinformationen des Zielobjekts der Backhaul-Verbindung;
wobei, wenn die Zielkonfigurationsinformationen einen Dienstgüteparameter, QoS-Parameter, einschließen, der QoS-Parameter des Ende-zu-Ende-Zielobjekts zwischen dem Zielobjekt der Sidelink-Schnittstelle und dem Zielobjekt der Backhaul-Verbindung aufgeteilt wird;
wobei das Zielobjekt der Sidelink-Schnittstelle durch eines der Folgenden identifiziert wird:
eine Kombination aus einer Quell-L2-ID der Sidelink-Schnittstelle, einer Empfangsort-L2-ID der Sidelink-Schnittstelle und einem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, einem Cast-Typ der Sidelink-Schnittstelle und dem Zielobjektidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle und einem logischen Kanalidentifizierer, der dem Zielobjekt der Sidelink-Schnittstelle entspricht;
eine Kombination aus der Quell-L2-ID der Sidelink-Schnittstelle, der Empfangsort-L2-ID der Sidelink-Schnittstelle, dem Cast-Typ der Sidelink-Schnittstelle und dem logischen Kanalidentifizierer, der dem Zielobjekt der Sidelink-Schnittstelle entspricht;
wobei das Ende-zu-Ende-Zielobjekt durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des ersten Endgeräts;
den Identifizierer des logischen Kanas der Uu-Schnittstelle und den Benutzeridentifizierer des ersten Endgeräts;
wobei das Zielobjekt der Backhaul-Verbindung durch eines der Folgenden identifiziert wird:
einen Zielobjektidentifizierer einer Uu-Schnittstelle;
einen Identifizierer des logischen Kanals der Uu-Schnittstelle;
den Zielobjektidentifizierer der Uu-Schnittstelle und einen Benutzeridentifizierer des zweiten Endgeräts;
den Identifizierer des logischen Kanals der Uu-Schnittstelle und den Benutzeridentifizierer des zweiten Endgeräts.

## Revendications

1. Procédé de transmission d'informations, réalisé par un dispositif de réseau, le procédé comprenant :
la détermination (41) d'une première relation de mappage cible ;
la transmission (42) de la première relation de mappage cible à un terminal cible, dans lequel le terminal cible comporte un premier terminal qui est un terminal distant et un second terminal qui est un terminal relais correspondant au premier terminal ;
dans lequel la première relation de mappage cible comporte :
une relation de mappage entre l'objet cible de bout en bout, l'objet cible de la liaison terrestre et un objet cible d'une interface de liaison latérale ;
l'objet cible de l'interface de liaison latérale est un canal logique de couche de commande de liaison radio, RLC, d'une interface de liaison latérale entre le premier terminal et le second terminal, l'objet cible de la liaison terrestre est un canal logique de couche RLC entre le second terminal et le dispositif de réseau pour transporter des données et/ou des informations de commande du premier terminal, et l'objet cible de bout en bout est un support de bout en bout entre le premier terminal et le dispositif de réseau ;
dans lequel la transmission (42) de la première relation de mappage cible à un terminal cible comprend :
la notification de la première relation de mappage cible au terminal cible par l'intermédiaire d'une signalisation de commande de ressources radio, RRC, de bout en bout ;
dans lequel la signalisation RRC transporte des informations de configuration cibles ;
les informations de configuration cibles comportent au moins l'une parmi : des informations de configuration de l'objet cible de l'interface de liaison latérale, des informations de configuration de l'objet cible de bout en bout ou des informations de configuration de l'objet cible de la liaison terrestre,
dans lequel, lorsque les informations de configuration cibles comportent un paramètre de qualité de service, QoS, le procédé de transmission d'informations comporte en outre :
la division du paramètre QoS de l'objet cible de bout en bout entre l'objet cible de l'interface de liaison latérale et l'objet cible de la liaison terrestre ;
dans lequel l'objet cible de l'interface de liaison latérale est identifié par l'une parmi ce qui suit :
une combinaison d'un ID L2 de source d'interface de liaison latérale, d'un ID L2 de destination d'interface de liaison latérale et d'un identifiant d'objet cible correspondant à l'objet cible de l'interface de liaison latérale ;
une combinaison de l'ID L2 de source d'interface de liaison latérale, de l'ID L2 de destination d'interface de liaison latérale, d'un type de diffusion d'interface de liaison latérale et de l'identifiant d'objet cible correspondant à l'objet cible de l'interface de liaison latérale ;
une combinaison de l'ID L2 de source d'interface de liaison latérale, de l'ID L2 de destination d'interface de liaison latérale et d'un identifiant de canal logique correspondant à l'objet cible de l'interface de liaison latérale ;
une combinaison de l'ID L2 de source d'interface de liaison latérale, de l'ID L2 de destination d'interface de liaison latérale, du type de diffusion d'interface de liaison latérale et de l'identifiant de canal logique correspondant à l'objet cible de l'interface de liaison latérale ;
dans lequel l'objet cible de bout en bout est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du premier terminal ;
l'identifiant de canal logique de l'interface Uu, et l'identifiant d'utilisateur du premier terminal ;
dans lequel l'objet cible de la liaison terrestre est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du second terminal ;
l'identifiant de canal logique de l'interface Uu, et l'identifiant d'utilisateur du second terminal.

2. Procédé selon la revendication 1, dans lequel l'objet cible de la liaison terrestre comporte en outre : des informations d'indication de type d'objet cible ;
les informations d'indication de type d'objet cible sont utilisées pour indiquer si l'objet cible est l'objet cible de la liaison terrestre.

3. Procédé selon la revendication 1, dans lequel l'identifiant d'utilisateur comporte : une identité temporaire de réseau radio cellulaire, C-RNTI.

4. Procédé selon la revendication 1, dans lequel la première relation de mappage cible est maintenue séparément sur la base d'une direction de transmission de liaison montante et d'une direction de transmission de liaison descendante.

5. Procédé de transmission d'informations, réalisé par un premier terminal, et comprenant :
la réception (81) d'une première relation de mappage cible envoyée par un dispositif de réseau ;
dans lequel la première relation de mappage cible comporte :
une relation de mappage entre l'objet cible de bout en bout, l'objet cible de la liaison terrestre et un objet cible d'une interface de liaison latérale ;
l'objet cible de l'interface de liaison latérale est un canal logique de couche de commande de liaison radio, RLC, d'une interface de liaison latérale entre le premier terminal et un second terminal, l'objet cible de la liaison terrestre est un canal logique de couche RLC entre le second terminal et le dispositif de réseau pour transporter des données et/ou des informations de commande du premier terminal, et l'objet cible de bout en bout est un support de bout en bout entre le premier terminal et le dispositif de réseau ; le second terminal est un terminal relais correspondant au premier terminal, et le premier terminal est un terminal distant ;
dans lequel la réception (81) d'une première relation de mappage cible envoyée par un dispositif de réseau comporte :
la réception de la première relation de mappage cible envoyée par le dispositif de réseau par l'intermédiaire d'une signalisation de commande de ressources radio, RRC, de bout en bout ;
dans lequel la signalisation RRC transporte des informations de configuration cibles ;
les informations de configuration cibles comportent au moins l'une parmi : des informations de configuration de l'objet cible de l'interface de liaison latérale, des informations de configuration de l'objet cible de bout en bout ou des informations de configuration de l'objet cible de la liaison terrestre ;
dans lequel, lorsque les informations de configuration cibles comportent un paramètre de qualité de service, QoS, le paramètre QoS de l'objet cible de bout en bout est divisé entre l'objet cible de l'interface de liaison latérale et l'objet cible de la liaison terrestre ;
dans lequel l'objet cible de l'interface de liaison latérale est identifié par l'une parmi ce qui suit :
une combinaison d'un ID L2 de source d'interface de liaison latérale, d'un ID L2 de destination d'interface de liaison latérale et d'un identifiant d'objet cible correspondant à l'objet cible de l'interface de liaison latérale ;
une combinaison de l'ID L2 de source d'interface de liaison latérale, de l'ID L2 de destination d'interface de liaison latérale, d'un type de diffusion d'interface de liaison latérale et de l'identifiant d'objet cible correspondant à l'objet cible de l'interface de liaison latérale ;
une combinaison de l'ID L2 de source d'interface de liaison latérale, de l'ID L2 de destination d'interface de liaison latérale et d'un identifiant de canal logique correspondant à l'objet cible de l'interface de liaison latérale ;
une combinaison de l'ID L2 de source d'interface de liaison latérale, de l'ID L2 de destination d'interface de liaison latérale, du type de diffusion d'interface de liaison latérale et de l'identifiant de canal logique correspondant à l'objet cible de l'interface de liaison latérale ;
dans lequel l'objet cible de bout en bout est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du premier terminal ;
l'identifiant de canal logique de l'interface Uu, et l'identifiant d'utilisateur du premier terminal ;
dans lequel l'objet cible de la liaison terrestre est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du second terminal ;
l'identifiant de canal logique de l'interface Uu, et l'identifiant d'utilisateur du second terminal.

6. Procédé de transmission d'informations, réalisé par un second terminal, et comprenant :
la réception (91) d'une première relation de mappage cible envoyée par un dispositif de réseau ;
dans lequel la première relation de mappage cible comporte :
une relation de mappage entre l'objet cible de bout en bout, l'objet cible de la liaison terrestre et un objet cible d'une interface de liaison latérale ;
l'objet cible de l'interface de liaison latérale est un canal logique de couche de commande de liaison radio, RLC, d'une interface de liaison latérale entre un premier terminal et le second terminal, l'objet cible de la liaison terrestre est un canal logique de couche RLC entre le second terminal et le dispositif de réseau pour transporter des données et/ou des informations de commande du premier terminal, et l'objet cible de bout en bout est un support de bout en bout entre le premier terminal et le dispositif de réseau ; le second terminal est un terminal relais correspondant au premier terminal, et le premier terminal est un terminal distant ;
dans lequel la réception (91) d'une première relation de mappage cible envoyée par un dispositif de réseau comporte :
la réception de la première relation de mappage cible envoyée par le dispositif de réseau par l'intermédiaire d'une signalisation de commande de ressources radio, RRC, de bout en bout ;
dans lequel la signalisation RRC transporte des informations de configuration cibles ;
les informations de configuration cibles comportent au moins l'une parmi : des informations de configuration de l'objet cible de l'interface de liaison latérale, des informations de configuration de l'objet cible de bout en bout ou des informations de configuration de l'objet cible de la liaison terrestre ;
dans lequel, lorsque les informations de configuration cibles comportent un paramètre de qualité de service, QoS, le paramètre QoS de l'objet cible de bout en bout est divisé entre l'objet cible de l'interface de liaison latérale et l'objet cible de la liaison terrestre ;
dans lequel l'objet cible de l'interface de liaison latérale est identifié par l'une parmi ce qui suit :
une combinaison d'un ID L2 de source d'interface de liaison latérale, d'un ID L2 de destination d'interface de liaison latérale et d'un identifiant d'objet cible correspondant à l'objet cible de l'interface de liaison latérale ;
une combinaison de l'ID L2 de source d'interface de liaison latérale, de l'ID L2 de destination d'interface de liaison latérale, d'un type de diffusion d'interface de liaison latérale et de l'identifiant d'objet cible correspondant à l'objet cible de l'interface de liaison latérale ;
une combinaison de l'ID L2 de source d'interface de liaison latérale, de l'ID L2 de destination d'interface de liaison latérale et d'un identifiant de canal logique correspondant à l'objet cible de l'interface de liaison latérale ;
une combinaison de l'ID L2 de source d'interface de liaison latérale, de l'ID L2 de destination d'interface de liaison latérale, du type de diffusion d'interface de liaison latérale et de l'identifiant de canal logique correspondant à l'objet cible de l'interface de liaison latérale ;
dans lequel l'objet cible de bout en bout est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du premier terminal ;
l'identifiant de canal logique de l'interface Uu, et l'identifiant d'utilisateur du premier terminal ;
dans lequel l'objet cible de la liaison terrestre est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du second terminal ;
l'identifiant de canal logique de l'interface Uu, et l'identifiant d'utilisateur du second terminal.

7. Dispositif de réseau (100), comprenant :
un module de détermination (101), configuré pour déterminer une première relation de mappage cible ;
un premier module de transmission (102), configuré pour transmettre la première relation de mappage cible à un terminal cible, dans lequel le terminal cible comporte un premier terminal qui est un terminal distant et un second terminal qui est un terminal relais correspondant au premier terminal ;
dans lequel la première relation de mappage cible comporte :
une relation de mappage entre l'objet cible de bout en bout, l'objet cible de la liaison terrestre et un objet cible d'une interface de liaison latérale ;
l'objet cible de l'interface de liaison latérale est un canal logique de couche de commande de liaison radio, RLC, d'une interface de liaison latérale entre le premier terminal et le second terminal, l'objet cible de la liaison terrestre est un canal logique de couche RLC entre le second terminal et le dispositif de réseau pour transporter des données et/ou des informations de commande du premier terminal, et l'objet cible de bout en bout est un support de bout en bout entre le premier terminal et le dispositif de réseau ;
dans lequel le premier module de transmission (102) est configuré en outre pour :
notifier la première relation de mappage cible au terminal cible par l'intermédiaire d'une signalisation de commande de ressources radio, RRC, de bout en bout ;
dans lequel la signalisation RRC transporte des informations de configuration cibles ;
les informations de configuration cibles comportent au moins l'une parmi : des informations de configuration de l'objet cible de l'interface de liaison latérale, des informations de configuration de l'objet cible de bout en bout ou des informations de configuration de l'objet cible de la liaison terrestre,
dans lequel, le dispositif de réseau (100) comprend en outre :
un premier module de division, configuré pour diviser, lorsque les informations de configuration cibles comportent un paramètre de qualité de service, QoS, le paramètre QoS de l'objet cible de bout en bout entre l'objet cible de l'interface de liaison latérale et l'objet cible de la liaison terrestre ;
dans lequel l'objet cible de l'interface de liaison latérale est identifié par l'une parmi ce qui suit :
une combinaison d'un ID L2 de source d'interface de liaison latérale, d'un ID L2 de destination d'interface de liaison latérale et d'un identifiant d'objet cible correspondant à l'objet cible de l'interface de liaison latérale ;
une combinaison de l'ID L2 de source d'interface de liaison latérale, de l'ID L2 de destination d'interface de liaison latérale, d'un type de diffusion d'interface de liaison latérale et de l'identifiant d'objet cible correspondant à l'objet cible de l'interface de liaison latérale ;
une combinaison de l'ID L2 de source d'interface de liaison latérale, de l'ID L2 de destination d'interface de liaison latérale et d'un identifiant de canal logique correspondant à l'objet cible de l'interface de liaison latérale ;
une combinaison de l'ID L2 de source d'interface de liaison latérale, de l'ID L2 de destination d'interface de liaison latérale, du type de diffusion d'interface de liaison latérale et de l'identifiant de canal logique correspondant à l'objet cible de l'interface de liaison latérale ;
dans lequel l'objet cible de bout en bout est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du premier terminal ;
l'identifiant de canal logique de l'interface Uu, et l'identifiant d'utilisateur du premier terminal ;
dans lequel l'objet cible de la liaison terrestre est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du second terminal ;
l'identifiant de canal logique de l'interface Uu, et l'identifiant d'utilisateur du second terminal.

8. Terminal (120), étant un premier terminal, comprenant :
un premier module de réception (121), configuré pour recevoir une première relation de mappage cible envoyée par un dispositif de réseau ;
dans lequel la première relation de mappage cible comporte :
une relation de mappage entre l'objet cible de bout en bout, l'objet cible de la liaison terrestre et un objet cible d'une interface de liaison latérale ;
l'objet cible de l'interface de liaison latérale est un canal logique de couche de commande de liaison radio, RLC, d'une interface de liaison latérale entre le premier terminal et un second terminal, l'objet cible de la liaison terrestre est un canal logique de couche RLC entre le second terminal et le dispositif de réseau pour transporter des données et/ou des informations de commande du premier terminal, et l'objet cible de bout en bout est un support de bout en bout entre le premier terminal et le dispositif de réseau ; le second terminal est un terminal relais correspondant au premier terminal, et le premier terminal est un terminal distant ;
dans lequel le premier module de réception (121) est configuré en outre pour :
recevoir la première relation de mappage cible envoyée par le dispositif de réseau par l'intermédiaire d'une signalisation de commande de ressources radio, RRC, de bout en bout ;
dans lequel la signalisation RRC transporte des informations de configuration cibles ;
les informations de configuration cibles comportent au moins l'une parmi : des informations de configuration de l'objet cible de l'interface de liaison latérale, des informations de configuration de l'objet cible de bout en bout ou des informations de configuration de l'objet cible de la liaison terrestre ;
dans lequel, lorsque les informations de configuration cibles comportent un paramètre de qualité de service, QoS, le paramètre QoS de l'objet cible de bout en bout est divisé entre l'objet cible de l'interface de liaison latérale et l'objet cible de la liaison terrestre ;
dans lequel l'objet cible de l'interface de liaison latérale est identifié par l'une parmi ce qui suit :
une combinaison d'un ID L2 de source d'interface de liaison latérale, d'un ID L2 de destination d'interface de liaison latérale et d'un identifiant d'objet cible correspondant à l'objet cible de l'interface de liaison latérale ;
une combinaison de l'ID L2 de source d'interface de liaison latérale, de l'ID L2 de destination d'interface de liaison latérale, d'un type de diffusion d'interface de liaison latérale et de l'identifiant d'objet cible correspondant à l'objet cible de l'interface de liaison latérale ;
une combinaison de l'ID L2 de source d'interface de liaison latérale, de l'ID L2 de destination d'interface de liaison latérale et d'un identifiant de canal logique correspondant à l'objet cible de l'interface de liaison latérale ;
une combinaison de l'ID L2 de source d'interface de liaison latérale, de l'ID L2 de destination d'interface de liaison latérale, du type de diffusion d'interface de liaison latérale et de l'identifiant de canal logique correspondant à l'objet cible de l'interface de liaison latérale ;
dans lequel l'objet cible de bout en bout est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du premier terminal ;
l'identifiant de canal logique de l'interface Uu, et l'identifiant d'utilisateur du premier terminal ;
dans lequel l'objet cible de la liaison terrestre est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du second terminal ;
l'identifiant de canal logique de l'interface Uu, et l'identifiant d'utilisateur du second terminal.

9. Terminal (140), étant un second terminal, comprenant :
un second module de réception (141), configuré pour recevoir une première relation de mappage cible envoyée par un dispositif de réseau ;
dans lequel la première relation de mappage cible comporte :
une relation de mappage entre l'objet cible de bout en bout, l'objet cible de la liaison terrestre et un objet cible d'une interface de liaison latérale ;
l'objet cible de l'interface de liaison latérale est un canal logique de couche de commande de liaison radio, RLC, d'une interface de liaison latérale entre un premier terminal et le second terminal, l'objet cible de la liaison terrestre est un canal logique de couche RLC entre le second terminal et le dispositif de réseau pour transporter des données et/ou des informations de commande du premier terminal, et l'objet cible de bout en bout est un support de bout en bout entre le premier terminal et le dispositif de réseau ; le second terminal est un terminal relais correspondant au premier terminal, et le premier terminal est un terminal distant ;
dans lequel le second module de réception (141) est configuré en outre pour :
recevoir la première relation de mappage cible envoyée par le dispositif de réseau par l'intermédiaire d'une signalisation de commande de ressources radio, RRC, de bout en bout ;
dans lequel la signalisation RRC transporte des informations de configuration cibles ;
les informations de configuration cibles comportent au moins l'une parmi : des informations de configuration de l'objet cible de l'interface de liaison latérale, des informations de configuration de l'objet cible de bout en bout ou des informations de configuration de l'objet cible de la liaison terrestre ;
dans lequel, lorsque les informations de configuration cibles comportent un paramètre de qualité de service, QoS, le paramètre QoS de l'objet cible de bout en bout est divisé entre l'objet cible de l'interface de liaison latérale et l'objet cible de la liaison terrestre ;
dans lequel l'objet cible de l'interface de liaison latérale est identifié par l'une parmi ce qui suit :
une combinaison d'un ID L2 de source d'interface de liaison latérale, d'un ID L2 de destination d'interface de liaison latérale et d'un identifiant d'objet cible correspondant à l'objet cible de l'interface de liaison latérale ;
une combinaison de l'ID L2 de source d'interface de liaison latérale, de l'ID L2 de destination d'interface de liaison latérale, d'un type de diffusion d'interface de liaison latérale et de l'identifiant d'objet cible correspondant à l'objet cible de l'interface de liaison latérale ;
une combinaison de l'ID L2 de source d'interface de liaison latérale, de l'ID L2 de destination d'interface de liaison latérale et d'un identifiant de canal logique correspondant à l'objet cible de l'interface de liaison latérale ;
une combinaison de l'ID L2 de source d'interface de liaison latérale, de l'ID L2 de destination d'interface de liaison latérale, du type de diffusion d'interface de liaison latérale et de l'identifiant de canal logique correspondant à l'objet cible de l'interface de liaison latérale ;
dans lequel l'objet cible de bout en bout est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du premier terminal ;
l'identifiant de canal logique de l'interface Uu, et l'identifiant d'utilisateur du premier terminal ;
dans lequel l'objet cible de la liaison terrestre est identifié par l'un parmi ce qui suit :
un identifiant d'objet cible d'une interface Uu ;
un identifiant de canal logique de l'interface Uu ;
l'identifiant d'objet cible de l'interface Uu et un identifiant d'utilisateur du second terminal ;
l'identifiant de canal logique de l'interface Uu, et l'identifiant d'utilisateur du second terminal.
